(19) Europäisches Patentamt
European Patent Office
Office européen des brevets

(11) **EP 4 220 105 A1**

(12) **EUROPEAN PATENT APPLICATION**
published in accordance with Art. 153(4) EPC

(43) Date of publication:
**02.08.2023 Bulletin 2023/31**

(21) Application number: **21872625.5**

(22) Date of filing: **28.09.2021**

(51) International Patent Classification (IPC):
**G01H 17/00** $^{(2006.01)}$   **G01M 7/02** $^{(2006.01)}$

(52) Cooperative Patent Classification (CPC):
**G01H 17/00; G01M 7/02**

(86) International application number:
**PCT/JP2021/035491**

(87) International publication number:
**WO 2022/065500 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2020 JP 2020161727**

(71) Applicant: **Kyushu University, National University
Corporation
Nishi-ku
Fukuoka-shi
Fukuoka 819-0395 (JP)**

(72) Inventors:
• **KONDOU Takahiro
  Fukuoka-shi, Fukuoka 819-0395 (JP)**
• **SUMIKAWA Taiki
  Fukuoka-shi, Fukuoka 819-0395 (JP)**

(74) Representative: **EP&C
P.O. Box 3241
2280 GE Rijswijk (NL)**

(54) **VIBRATION ANALYSIS METHOD, PROGRAM, AND STORAGE MEDIUM**

(57)     This vibration analysis method is a method for analyzing vibrations of a large-scale system with local strong nonlinearities, and includes a process (1) of applying the new type of complex modal analysis to an equation for a linear state variable to convert the equation to a real modal equation for lower-order modes, and correcting an effect of higher-order modes of the linear state variable from an equation for a nonlinear state variable and eliminating the modes, a process (2) of selecting secondary modes, which have a large effect on a solution of an original large-scale system, from the real modal equation for lower-order modes, and, in relation to secondary modes, which have a small effect, eliminating the modes thereof by incorporating the effect to the equation for nonlinear state variables as a correction term obtained from an approximate solution of the real modal equation for lower-order modes, and deriving the dimension reduced model, and a process (3) of calculating a frequency response by using the dimension reduced model.

FIG. 3

EP 4 220 105 A1

**Description**

[Technical Field]

The present invention mainly relates to a high-performance vibration analysis method for large-scale systems with local strong nonlinearities. More specifically, it relates to a dimensionality reduction method using a new type of complex modal analysis. This application claims priority based on Japanese Patent Application No. 2020-161727 filed in Japan on September 28, 2020, the content of which is incorporated herein.

[Background Art]

A machine is composed of a large number of elements that move relative to each other and has elements with strong nonlinearities such as bearings at base supporting portions or gears at joints between the elements. Moreover, in stress analysis and vibration analysis at design stage, by using a finite element method, and the like, it is modeled as a precise large-scale degree-of-freedom system close to an actual machine in many cases. Therefore, almost all machines are large-scale degree-of-freedom systems with local strong nonlinearities.
On the other hand, in recent years, there has been an increasing demand for higher performance of machines. To realize this requirement, it is necessary to implement a vibration analysis that fully considers an effect of nonlinearity that is unavoidably included in the system at a design stage. Moreover, to clarify the full picture of nonlinear vibrations that are complicated and diverse, it is not sufficient to simply perform a numerical simulation for a specific system parameter, and the full content of frequency response including the stability analysis needs to be clarified.
Until now, a Galerkin method based on linear eigenmode expansion (refer to, for example, Patent Document 1 described below) has often been used for a vibration analysis of multi-degree-of-freedom nonlinear systems because it has an algorithm with regularity and can be applied to a wide range of problems.

[Citation List]

[Patent Literature]

[Patent Literature 1]
Japanese Unexamined Patent Application, First Publication No. 2017-211877

[Summary of Invention]

[Technical Problem]

However, the Galerkin method has significant disadvantages such as an explosive increase in calculation time and memory size when an analysis with high accuracy is attempted by increasing the number of modes to be used and the disappearance of a mode separation effect with nonlinearity by dispersing throughout a system after a conversion to modal coordinates even if a model has nonlinearity only locally.
In order to overcome such a situation, research has been vigorously conducted to perform an analysis with high accuracy using a dimension reduced model with a small number of modes but have not yet reached a fundamental solution. The main problem is that accuracy of the analysis (especially an accuracy of stability analysis) deteriorates significantly due to a coupling between modes specific to a nonlinear system if modes to be used are not appropriately selected. In this manner, it is not an exaggeration to say that there are no practical vibration analysis methods for a large-scale nonlinear system, and it is an urgent problem in numerical calculation related to mechanical design to develop a high-performance vibration analysis method that can deal with this problem.
The present invention has been made with aims to fundamentally solve the problems described above and provides a method of rationally constructing the dimension reduced model with high accuracy in which the effect of nonlinearity is appropriately reflected for a large-scale system with local strong nonlinearity.

[Solution to Problem]

A proposed method is configured mainly from the following two processes.
(1) A process of applying the new type of complex modal analysis to the equations for linear state variables [Equation (1) and Equation (4) to be described below] to convert the equations to the real modal equations for lower-order modes, and correcting and eliminating an effect of higher-order modes of the linear state variables from the equation for nonlinear state variables [Equation (2) to be described below], and (2) a process of selecting modes (dominant modes), which have a large effect on a solution of an original large-scale system, from the real modal equation for lower-order modes, and, in relation to modes (secondary modes), which have a small effect, eliminating secondary modes by incorporating the effect to the equation for the nonlinear state variables [Equation (2)] as correction terms obtained from an approximate and deriving the dimension reduced model, and a process of selecting dominant modes from lower-order modes (as rationally as possible) in a calculation procedure of a frequency response.

[Advantageous Effects of Invention]

By using this dimension reduced model, a vibration analysis including stability analysis of a large-scale nonlinear system, which has not been possible, can be performed at high speed and with high accuracy. Moreover, the proposed method has very high versatility and can be generally applied to large-scale vibration systems with local strong nonlinearities.

[Brief Description of Drawings]

FIG. 1 is a diagram which shows an overview of the present analysis technique.

FIG. 2 is a flowchart of the present analysis technique.

FIG. 3 is a schematic diagram which shows an analytical model of an application example of a dimensionality reduction method.

FIG. 4 is a frequency response diagram which shows first-order to fifth-order primary resonance regions in the full model.

FIG. 5 is a frequency response diagram which shows the first-order and second-order primary resonance regions in the full model.

FIG. 6 is a frequency response diagram which shows the first-order to fifth-order primary resonance regions in the dimension reduced model ($n_l$=59, $n_a$=5).

FIG. 7 is a frequency response diagram which shows the first-order and second-order primary resonance regions in the dimension reduced model ($n_l$=59, $n_a$=5).

FIG. 8 is a frequency response diagram which shows the first-order to fifth-order primary resonance regions in the dimension reduced model ($n_l$=59, $n_a$=15).

FIG. 9 is a frequency response diagram of the first-order and second-order primary resonance regions in the dimension reduced model ($n_l$=59, $n_a$=15).

FIG. 10 is a frequency response diagram which shows the first-order to fifth-order primary resonance regions in the dimension reduced model ($n_l$=5, $n_a$=5).

FIG. 11 is a frequency response diagram which shows the first-order to fifth-order primary resonance regions in the dimension reduced model ($n_l$=10, $n_a$=5).

FIG. 12 is a diagram which shows an effect of the lower-order modes number $n_l$ on the first-order natural frequency.

FIG. 13 is a diagram which shows an effect of the lower-order modes number $n_l$ on the second-order natural frequency.

FIG. 14 is a diagram which shows an effect of the lower-order modes number $n_l$ on the third-order natural frequency.

FIG. 15 is a diagram which shows an effect of the lower-order modes number $n_l$ on the fourth-order natural frequency.

FIG. 16 is a diagram which shows an effect of the lower-order modes number $n_l$ on the fifth-order natural frequency.

FIG. 17 is a frequency response diagram of the second-order primary resonance region in the full model.

FIG. 18 is a frequency response diagram of the second-order primary resonance region in the dimension reduced model ($n_l$=20, $\delta$=5$\times$10$^{-4}$).

FIG. 19 is a frequency response diagram of the second-order primary resonance region in the dimension reduced model ($n_l$=20, $\delta$=1$\times$10$^{-4}$).

FIG. 20 is a frequency response diagram of the second-order primary resonance region in the dimension reduced model ($n_l$=20, $\delta$=1$\times$10$^{-5}$).

FIG. 21 is a frequency response diagram of the first-order to second-order primary resonance regions in the dimension reduced model ($n_l$=15, $\delta$=7$\times$10$^{-4}$).

FIG. 22 is a frequency response diagram of the first-order to second-order primary resonance regions in the dimension reduced model ($n_l$=15, $\delta$=1$\times$10$^{-4}$).

FIG. 23 is a frequency response diagram of the first-order to second-order primary resonance regions in the dimension reduced model ($n_l$=15, $\delta$=2$\times$10$^{-5}$).

FIG. 24 is a frequency response diagram of the first-order to second-order primary resonance regions in the dimension reduced model ($n_l$=599, $n_a$=20).

FIG. 25 is a frequency response diagram of the fourth-order to fifth-order primary resonance regions in the dimension

reduced model ($n_l$=30, $\delta$=1×10$^{-3}$).

FIG. 26 is a frequency response diagram of the fourth-order to fifth-order primary resonance regions in the dimension reduced model ($n_l$=30, $\delta$=5×10$^{-4}$).

FIG. 27 is the frequency response diagram of the fourth-order to fifth-order primary resonance regions in the dimension reduced model ($n_l$=30, $\delta$=2×10$^{-4}$).

FIG. 28 is a frequency response diagram of the fourth-order to fifth-order primary resonance regions in the dimension reduced model ($n_l$=599, $n_a$=20).

FIG. 29 is a block diagram which shows an example of a device that implements the present analysis technique.

[Description of Embodiments]

Specific implementation items in the two processes described above will be described below.

It should be noted that, in the present specification, expressions of terms and mathematical formulas are restricted in the sentences other than independent mathematical formulas that are captured as the images. For this reason, for example, a term captured as an image in the present specification and expressed as a term (0-1) is expressed as "$^c\psi{\sim}_1{}^T$" in the sentence of the present specification. A term that is incorporated as an image in the present specification and expressed as a term (0-2) is expressed as "y ˙" in the text of the present specification. Note that "y ˙" means a term obtained by first-order differentiation of y with respect to time. [Math. 1]

$$ {}^c\widetilde{\psi}_1^T \quad \cdot\cdot\,(0-1) $$

$$ \dot{y} \quad \cdot\cdot\,(0-2) $$

[Analysis target and fundamental equations]

A method proposed in the present invention analyzes a large-scale vibration system with N degrees of freedom and local strong nonlinearities. The fundamental equations can be generally expressed as follows.

[Math. 2]

$$ M_{11}\ddot{y}_1 + C_{11}\dot{y}_1 + K_{11}y_1 + M_{12}\ddot{y}_2 + C_{12}\dot{y}_2 + K_{12}y_2 = f_1 \quad \cdot\cdot\,(1) $$

$$ M_{22}\ddot{y}_2 + C_{22}\dot{y}_2 + K_{22}y_2 + M_{21}\ddot{y}_1 + C_{21}\dot{y}_1 + K_{21}y_1 + n_2(y_2,\dot{y}_2) = f_2 $$

$$ \cdot\cdot\,(2) $$

Where,

$$ \left.\begin{array}{l} y_1,\ f_1 = f_1(\omega t):(n\times 1), \quad y_2,\ n_2 = n_2(y_2,\dot{y}_2), \quad f_2 = f_2(\omega t):(m\times 1), \quad ``\cdot" = d/dt \\[4pt] M_{11},\ C_{11},\ K_{11}:(n\times n), \quad M_{12},\ C_{12},\ K_{12}:(n\times m) \\[4pt] M_{22},\ C_{22},\ K_{22}:(m\times m), \quad M_{21},\ C_{21},\ K_{21}:(m\times n), \quad n+m=N, \quad m\ll n \end{array}\right\} $$

$$ \cdot\cdot\,(3) $$

$y_1$ is an n-dimensional vector that summarizes the physical coordinates of state variables on which the nonlinear forces do not act, and $y_2$ is an m-dimensional vector that summarizes the physical coordinates of state variables on which the nonlinear forces act. In the following description, $y_1$ will be referred to as a linear state variable and $y_2$ will be referred to as a nonlinear state variable. For convenience, Equation (1) will be referred to as a linear state equation and Equation (2) will be referred to as a nonlinear state equation. $n_2$ is set to a strong nonlinear function with respect to $y_2$ and $y\dot{}_2$, and $f_1$ and $f_2$ are set to the harmonic forced external forces of a period $2\pi/\omega$. M is a coefficient matrix (a mass matrix) for mass elements. C is a coefficient matrix (a damping matrix) for damping elements. K is a coefficient matrix (a stiffness matrix) for linear spring elements. Positive definiteness for $M_{11}$, $C_{11}$ and $K_{11}$ are not assumed to ensure versatility of the proposed method. The fact that m<<<n indicates that the nonlinearity exists only locally. In this manner, the proposed method is applicable to almost large-scale vibration systems with local strong nonlinearities.

In formulating a dimensionality reduction method, a following system in which the coefficient matrices of Equation (1) are replaced with the transposed matrices and the external force set to zero is treated at the same time.

[Math. 3]

$$M_{11}^T \ddot{y}_1^* + C_{11}^T \dot{y}_1^* + K_{11}^T y_1^* + M_{21}^T \ddot{y}_2 + C_{21}^T \dot{y}_2 + K_{21}^T y_2 = 0 \quad \cdot \cdot (4)$$

Where, an upper right subscript "T" is the transposition symbol. $y_2$ in Equation (4) is a solution that satisfies Equations (1) and (2), but since $y_1$ is generally different from a solution that satisfies Equations (1) and (2), it is expressed as $y^*_1$ in Equation (4). In the following description, Equation (4) is referred to as a dual system of Equation (1).

«Application of new type of complex modal analysis to linear state equation»

[Conversion to first-order differential equation]

To formulate the dimensionality reduction method based on the new type of complex modal analysis, Equations (1) and (4) are transformed into the first-order differential equations as follows. Note that $I_n$ denotes an $n^{th}$ order unit matrix.

[Math. 4]

$$B_{11} \dot{x}_1 + B_{12} \dot{x}_2 = A_{11} x_1 + A_{12} x_2 - E_1 g_1 \quad \cdot \cdot (5)$$

$$B_{11}^T \dot{x}_1^* + B_{21}^T \dot{x}_2 = A_{11}^T x_1^* + A_{12}^* x_2 \quad \cdot \cdot (6)$$

Where,

$$A_{11} = \begin{bmatrix} 0 & K_{11} \\ K_{11} & C_{11} \end{bmatrix}, \quad A_{12} = \begin{bmatrix} 0 & 0 \\ K_{12} & C_{12} \end{bmatrix}, \quad B_{11} = \begin{bmatrix} K_{11} & 0 \\ 0 & -M_{11} \end{bmatrix}, \quad B_{12} = \begin{bmatrix} 0 & 0 \\ 0 & -M_{12} \end{bmatrix}$$

$$A_{12}^* = \begin{bmatrix} 0 & 0 \\ K_{21}^T & C_{21}^T \end{bmatrix}, \quad B_{21} = \begin{bmatrix} 0 & 0 \\ 0 & -M_{21} \end{bmatrix}, \quad E_1 = \begin{bmatrix} 0 & 0 \\ I_n & 0 \end{bmatrix}$$

$$x_1 = \begin{bmatrix} y_1 \\ \dot{y}_1 \end{bmatrix}, \quad x_2 = \begin{bmatrix} y_2 \\ \dot{y}_2 \end{bmatrix}, \quad x_1^* = \begin{bmatrix} y_1^* \\ \dot{y}_1^* \end{bmatrix}, \quad g_1 = \begin{bmatrix} f_1 \\ \dot{f}_1 \end{bmatrix}$$

$$\cdot \cdot (7)$$

[General eigenvalue problem]

In the dimensionality reduction method, first, the nonlinear state variables are fixed by setting $\dot{x}_2 = 0$ and $x_2 = 0$ in Equations (5) and (6), and a following general eigenvalue problem is derived from a free vibration system with $g_1 = 0$.

[Math. 5]

$$[A_{11} - \lambda B_{11}] X_1 = 0 \quad \cdot \cdot (8)$$

$$[A_{11}^T - \lambda B_{11}^T] X_1^* = 0 \quad \cdot \cdot (9)$$

The eigenvalues $\lambda$ obtained from Equations (8) and (9) are consistent with each other and generally become complex numbers. In addition, corresponding eigenvectors $X_1$ and $X^*_1$ are also complex vectors. $X_1$ is a right complex

eigenvector and $X^*_1$ is a left complex eigenvector for Equation (8), and $X^*_1$ is a right complex eigenvector and $X_1$ is a left complex eigenvector for Equation (9). In terms of vibration engineering, an imaginary part of the eigenvalue $\lambda$ corresponds to a natural angular frequency, and $X_1$ and $X^*_1$ correspond to left and right complex constraint modes.

[Lower-order modes of complex constraint modes]

As a first step, the complex eigenvalues and the left and right complex eigenvectors (the complex constraint modes) are obtained from Equations (8) and (9). However, when a dimension 2n of the general eigenvalue problem is large, it is difficult to obtain all eigenvalues and eigenvectors (a solution of a large-scale general eigenvalue problem remains an unsolved conundrum in a field of numerical calculation and is virtually almost impossible). However, it is still possible to obtain eigenvectors corresponding to a relatively small number of eigenvalues in order from a lower order (in ascending order of an absolute value).

On the other hand, it is known that an effect on vibration characteristics generally decreases as a mode order increases in both linear and nonlinear systems.

Therefore, in this dimensionality reduction method, only relatively lower-order eigenvalues and eigenvectors from the first order to $n_1^{th}$ ($n_1$<<$n$) order, which may have a large effect on an accuracy of a solution, are obtained from the general eigenvalue problem, an effect of higher-order modes of an ($n_1+1$)$^{th}$ order or higher is approximated using lower-order modes up to the $n_1^{th}$ order. A value of $n_1$ can be set based on a maximum order of a natural frequency (an imaginary part of an eigenvalue) present within a frequency range about several times a maximum frequency to be analyzed.

The relational equations required for this procedure are as follows. In the equations, subscripts "l" and "h" indicate variables or physical quantities associated with lower-order modes and higher-order modes, respectively. A physical quantity with an upper left subscript "C" indicates that it is a complex number, and similarly, "R" and "I" in principle represent the real part and the imaginary part thereof, respectively.

First, left and right eigenvectors corresponding to eigenvalues from the first order to the $n_l^{th}$ ($n_l$<<$n$) order in Equation (8) are obtained. These eigenvalues are assumed to have negative complex numbers for all real parts, and a $p^{th}$ order ($p=1, ..., n_l$) complex conjugate eigenvalue is expressed as follows.
[Math. 6]

$$
\left.
\begin{array}{l}
{}^{C}\lambda_{p,1},\ {}^{C}\overline{\lambda}_{p,1} = {}^{R}\lambda_{p,1} \pm i\,{}^{I}\lambda_{p,1} = -\zeta_{p,1}\omega_{p,1} \pm i\sqrt{1-\zeta_{p,1}^2}\,\omega_{p,1},\ \ i=\sqrt{-1} \\[3mm]
{}^{R}\lambda_{p,1} = -\zeta_{p,1}\omega_{p,1},\ \ {}^{I}\lambda_{p,1} = \sqrt{1-\zeta_{p,1}^2}\,\omega_{p,1},\ \ \omega_{p,1}>0,\ \ 0\leq\zeta_{p,1}<0
\end{array}
\right\}\ (p=1,\cdots,n_l)
$$

$$\cdots (1\,0)$$

Where, $\omega_{p,1}$ and $\zeta_{p,1}$ represent an undamped natural angular frequency and a damping ratio of a $p^{th}$ order mode, respectively. Furthermore, these $n_l$ pairs of eigenvalues ($2n_l$ eigenvalues in total) are put together and displayed in a matrix as follows.
[Math. 7]

$$
\left.
\begin{array}{l}
{}^{C}\boldsymbol{\Lambda}_{1l},\ {}^{C}\overline{\boldsymbol{\Lambda}}_{1l} = {}^{R}\boldsymbol{\Lambda}_{1l} \pm i\,{}^{I}\boldsymbol{\Lambda}_{1l},\ \ {}^{R}\boldsymbol{\Lambda}_{1l} = -\boldsymbol{Z}_{1l}\boldsymbol{\Omega}_{1l},\ \ {}^{I}\boldsymbol{\Lambda}_{1l} = \sqrt{\boldsymbol{I}_{n_l} - \boldsymbol{Z}_{1l}^2}\,\boldsymbol{\Omega}_{1l} : (n_l \times n_l) \\[3mm]
{}^{R}\boldsymbol{\Lambda}_{1l} = \mathrm{diag}[{}^{R}\lambda_{1,1}\ {}^{R}\lambda_{2,1}\ \cdots\ {}^{R}\lambda_{n_l,1}],\ \ {}^{I}\boldsymbol{\Lambda}_{1l} = \mathrm{diag}[{}^{I}\lambda_{1,1}\ {}^{I}\lambda_{2,1}\ \cdots\ {}^{I}\lambda_{n_l,1}] : (n_l \times n_l) \\[3mm]
\boldsymbol{\Omega}_{1l} = \mathrm{diag}[\omega_{1,1}\ \omega_{2,1}\ \cdots\ \omega_{n_l,1}] : (n_l \times n_l),\ \ \omega_{p,1} = \sqrt{{}^{R}\lambda_{p,1}^2 + {}^{I}\lambda_{p,1}^2} \\[3mm]
\boldsymbol{Z}_{1l} = \mathrm{diag}[\zeta_{1,1}\ \zeta_{2,1}\ \cdots\ \zeta_{n_l,1}] : (n_l \times n_l),\ \ \zeta_{p,1} = -\dfrac{{}^{R}\lambda_{p,1}}{\omega_{p,1}}
\end{array}
\right\}
$$

$$\cdots (1\,1)$$

Where, diag[ ] represents a diagonal matrix.

A right complex constraint modal matrix in which $n_l$ sets ($2n_l$ pieces) of the right complex eigenvectors of Equation (8) corresponding to this complex eigenvalue are put together is set as $^C\Phi^\wedge_{1l}$. Similarly, a left complex constraint modal matrix in which $n_l$ sets ($2n_l$ pieces) of left complex eigenvectors are put together is set as $^C\Psi^\wedge_{1l}$. It is assumed that $^C\Phi^\wedge_{1l}$ and $^C\Psi^\wedge_{1l}$ are normalized to satisfy the following equation.

[Math. 8]

$$
\left.
\begin{aligned}
{}^C\hat{\Psi}_{1l}^T A_{11}\, {}^C\hat{\Phi}_{1l} &=
\begin{bmatrix}
{}^C\Lambda_{1l}\,{}^C\overline{\Lambda}_{1l} - {}^C\Lambda_{1l}^2 & 0 \\
0 & {}^C\Lambda_{1l}\,{}^C\overline{\Lambda}_{1l} - {}^C\overline{\Lambda}_{1l}^2
\end{bmatrix}
\begin{bmatrix}
{}^C\Lambda_{1l} & 0 \\
0 & {}^C\overline{\Lambda}_{1l}
\end{bmatrix} : (2n_l \times 2n_l) \\[2em]
{}^C\hat{\Psi}_{1l}^T B_{11}\, {}^C\hat{\Phi}_{1l} &=
\begin{bmatrix}
{}^C\Lambda_{1l}\,{}^C\overline{\Lambda}_{1l} - {}^C\Lambda_{1l}^2 & 0 \\
0 & {}^C\Lambda_{1l}\,{}^C\overline{\Lambda}_{1l} - {}^C\overline{\Lambda}_{1l}^2
\end{bmatrix} : (2n_l \times 2n_l)
\end{aligned}
\right\}
$$

$$\cdot\cdot(1\,2)$$

At this time, $^C\Phi^\wedge_{1l}$ and $^C\Psi^\wedge_{1l}$ are expressed as follows. Note that $^R\varphi_{p,1}$ and $^I\varphi_{p,1}$ are a real part and an imaginary part of the right complex eigenvector of the $p^{th}$ order mode, respectively. In addition, $^R\psi_{p,1}$ and $^I\psi_{p,1}$ are a real part and an imaginary part of the left complex eigenvector of the $p^{th}$ order mode, respectively.

[Math. 9]

$$
\left.
\begin{aligned}
{}^C\hat{\Phi}_{1l} &=
\begin{bmatrix}
{}^C\Phi_{1l} & {}^C\overline{\Phi}_{1l} \\
{}^C\Phi_{1l}\,{}^C\Lambda_{1l} & {}^C\overline{\Phi}_{1l}\,{}^C\overline{\Lambda}_{1l}
\end{bmatrix}, \quad
{}^C\hat{\Psi}_{1l} =
\begin{bmatrix}
{}^C\Psi_{1l} & {}^C\overline{\Psi}_{1l} \\
{}^C\Psi_{1l}\,{}^C\Lambda_{1l} & {}^C\overline{\Psi}_{1l}\,{}^C\overline{\Lambda}_{1l}
\end{bmatrix} : (2n \times 2n_l) \\[1em]
{}^C\Phi_{1l}, {}^C\overline{\Phi}_{1l} &= {}^R\Phi_{1l} \pm i\,{}^I\Phi_{1l}, \quad
{}^C\Psi_{1l}, {}^C\overline{\Psi}_{1l} = {}^R\Psi_{1l} \pm i\,{}^I\Psi_{1l} : (n \times n_l) \\[1em]
{}^R\Phi_{1l} &= [{}^R\phi_{1,1}\ \ {}^R\phi_{2,1}\ \cdots\ {}^R\phi_{n_l,1}], \quad
{}^I\Phi_{1l} = [{}^I\phi_{1,1}\ \ {}^I\phi_{2,1}\ \cdots\ {}^I\phi_{n_l,1}] : (n \times n_l) \\[1em]
{}^R\Psi_{1l} &= [{}^R\psi_{1,1}\ \ {}^R\psi_{2,1}\ \cdots\ {}^R\psi_{n_l,1}], \quad
{}^I\Psi_{1l} = [{}^I\psi_{1,1}\ \ {}^I\psi_{2,1}\ \cdots\ {}^I\psi_{n_l,1}] : (n \times n_l)
\end{aligned}
\right\}
$$

$$\cdot\cdot(1\,3)$$

[Realization of lower-order modes of complex constraint modes]

In order to speed up the calculation, a right real constraint modal matrix $^R\Phi^\wedge_{1l}$ and a left real constraint modal matrix $^R\Psi^\wedge_{1l}$ are derived from the right and left complex constraint modal matrices $^C\Phi^\wedge_{1l}$ and $^C\Psi^\wedge_{1l}$ for the lower-order modes as follows.

[Math. 10]

$$^R\hat{\tilde{\Phi}}_{1l} = {}^C\hat{\tilde{\Phi}}_{1l}\begin{bmatrix} I_{n_l} & I_{n_l} \\ {}^C\Lambda_{1l} & {}^C\bar{\Lambda}_{1l} \end{bmatrix}^{-1} = \begin{bmatrix} \tilde{\Phi}_{11l} & {}^I\tilde{\Phi}_{1l} \\ -{}^I\tilde{\Phi}_{1l}\Omega_{1l}^2 & \tilde{\Phi}_{22l} \end{bmatrix} : (2n \times 2n_l)$$

$$^R\hat{\tilde{\Psi}}_{1l} = {}^C\hat{\tilde{\Psi}}_{1l}\begin{bmatrix} I_{n_l} & I_{n_l} \\ {}^C\Lambda_{1l} & {}^C\bar{\Lambda}_{1l} \end{bmatrix}^{-1} = \begin{bmatrix} \tilde{\Psi}_{11l} & {}^I\tilde{\Psi}_{1l} \\ -{}^I\tilde{\Psi}_{1l}\Omega_{1l}^2 & \tilde{\Psi}_{22l} \end{bmatrix} : (2n \times 2n_l)$$

$$\tilde{\Phi}_{11l} = {}^R\tilde{\Phi}_{1l}{}^I\Lambda_{1l} - {}^I\tilde{\Phi}_{1l}{}^R\Lambda_{1l}, \quad \tilde{\Phi}_{22l} = {}^R\tilde{\Phi}_{1l}{}^I\Lambda_{1l} + {}^I\tilde{\Phi}_{1l}{}^R\Lambda_{1l}$$

$$\tilde{\Psi}_{11l} = {}^R\tilde{\Psi}_{1l}{}^I\Lambda_{1l} - {}^I\tilde{\Psi}_{1l}{}^R\Lambda_{1l}, \quad \tilde{\Psi}_{22l} = {}^R\tilde{\Psi}_{1l}{}^I\Lambda_{1l} + {}^I\tilde{\Psi}_{1l}{}^R\Lambda_{1l} \quad : (n \times n_l)$$

$$^R\tilde{\Phi}_{1l} = {}^R\Phi_{1l}{}^I\Lambda_{1l}^{-1}, \quad {}^I\tilde{\Phi}_{1l} = {}^I\Phi_{1l}{}^I\Lambda_{1l}^{-1}, \quad {}^R\tilde{\Psi}_{1l} = {}^R\Psi_{1l}{}^I\Lambda_{1l}^{-1}, \quad {}^I\tilde{\Psi}_{1l} = {}^I\Psi_{1l}{}^I\Lambda_{1l}^{-1}$$

$$\cdot\cdot(14)$$

[Introduction of real modal coordinates for lower-order modes]

Physical coordinates $x_1$ and $x^*_1$ of the linear state variables can be represented by a sum of $x_{1l}$ and $x^*_{1l}$ based on the lower-order modes and $x_{1h}$ and $x^*_{1h}$ based on the higher-order modes as follows. Note that $y_{1l}$ and $y^*_{1l}$ are the linear state variables for the lower-order modes, respectively. $y_{1h}$ and $y^*_{1h}$ are the linear state variables for the higher-order modes, respectively.
[Math. 11]

$$x_1 = x_{1l} + x_{1h}, \quad x_{1l} = \begin{bmatrix} y_{1l} \\ \dot{y}_{1l} \end{bmatrix} : (2n \times 1), \quad x_{1h} = \begin{bmatrix} y_{1h} \\ \dot{y}_{1h} \end{bmatrix} : (2n \times 1) \quad \cdot\cdot(15)$$

$$x_1^* = x_{1l}^* + x_{1h}^*, \quad x_{1l}^* = \begin{bmatrix} y_{1l}^* \\ \dot{y}_{1l}^* \end{bmatrix} : (2n \times 1), \quad x_{1h}^* = \begin{bmatrix} y_{1h}^* \\ \dot{y}_{1h}^* \end{bmatrix} : (2n \times 1) \quad \cdot\cdot(16)$$

Among these, for $x_{1l}$ and $x^*_{1l}$, real modal coordinates $\eta_{1l}$ and $\eta^*_{1l}$ are introduced by the following equations via $^R\hat{\Phi}_{1l}$ and $^R\hat{\Psi}_{1l}$ respectively. Note that $\xi_{1l}$ is the real modal coordinates corresponding for the physical coordinates of the lower-order modes.
[Math. 12]

$$x_{1l} = {}^R\hat{\tilde{\Phi}}_{1l}(\eta_{1l} + T_{12l}x_2 + T_{11l}g_1), \quad \eta_{1l} = \begin{bmatrix} \xi_{1l} \\ \dot{\xi}_{1l} \end{bmatrix} : (2n_l \times 1)$$

$$T_{12l} = \begin{bmatrix} -{}^I\tilde{\Psi}_{1l}^T C_{12} & -{}^I\tilde{\Psi}_{1l}^T M_{12} \\ {}^I\tilde{\Psi}_{1l}^T K_{12} & 0 \end{bmatrix} : (2n_l \times 2m), \quad T_{11l} = \begin{bmatrix} 0 & 0 \\ -{}^I\tilde{\Psi}_{1l}^T & 0 \end{bmatrix} : (2n_l \times 2n)$$

$$\cdot\cdot(17)$$

$$x_{1l}^* = {}^R\hat{\Psi}_{1l}(\eta_{1l}^* + T_{12l}^* x_2), \quad \eta_{1l}^* = \begin{bmatrix} \xi_{1l}^* \\ \dot{\xi}_{1l}^* \end{bmatrix} : (2n_l \times 1)$$

$$T_{12l}^* = \begin{bmatrix} -{}^I\tilde{\Phi}_{1l}^T C_{21}^T & -{}^I\tilde{\Phi}_{1l}^T M_{21}^T \\ {}^I\tilde{\Phi}_{1l}^T K_{21}^T & 0 \end{bmatrix} : (2n_l \times 2m) \qquad \cdot\cdot(18)$$

[Derivation of real modal equation for lower-order modes]

After substituting Equations (15) and (17) into Equation (5), multiplying it by ${}^R\Psi\hat{}_{1l}{}^T$ from the left and rearranging it, a real modal equation for the lower-order modes is derived as follows.

[Math. 13]

$$\ddot{\xi}_{1l} + 2Z_{1l}\Omega_{1l}\dot{\xi}_{1l} + \Omega_{1l}^2\xi_{1l} + R_{12l}\ddot{y}_2 + Q_{12l}\dot{y}_2 + P_{12l}y_2 = {}^I\tilde{\Psi}_{1l}^T\dot{f}_1 + \tilde{\Psi}_{11l}^T f_1$$

$$P_{12l} = -\Omega_{1l}^2\,{}^I\tilde{\Psi}_{1l}^T C_{12} + \tilde{\Psi}_{11l}^T K_{12}, \quad Q_{12l} = -\Omega_{1l}^2\,{}^I\tilde{\Psi}_{1l}^T M_{12} + \tilde{\Psi}_{22l}^T C_{12} + {}^I\tilde{\Psi}_{1l}^T K_{12}$$

$$R_{12l} = \tilde{\Psi}_{22l}^T M_{12}, \quad P_{12l}, Q_{12l}, R_{12l} : (n_l \times m)$$

$$\cdot\cdot(19)$$

For the dual system, substituting Equations (16) and (18) into Equation (6), multiplying it by ${}^R\Phi\hat{}_{1l}{}^T$ from the left and rearranging it, a real modal equation for the lower-order modes is derived as follows.

[Math. 14]

$$\ddot{\xi}_{1l}^* + 2Z_{1l}\Omega_{1l}\dot{\xi}_{1l}^* + \Omega_{1l}^2\xi_{1l}^* + R_{12l}^*\ddot{y}_2 + Q_{12l}^*\dot{y}_2 + P_{12l}^*y_2 = 0$$

$$P_{12l}^* = -\Omega_{1l}^2\,{}^I\tilde{\Phi}_{1l}^T C_{21}^T + \tilde{\Phi}_{11l}^T K_{21}^T, \quad Q_{12l}^* = -\Omega_{1l}^2\,{}^I\tilde{\Phi}_{1l}^T M_{21}^T + \tilde{\Phi}_{22l}^T C_{21}^T + {}^I\tilde{\Phi}_{1l}^T K_{21}^T$$

$$R_{12l}^* = \tilde{\Phi}_{22l}^T M_{21}^T, \quad P_{12l}^*, Q_{12l}^*, R_{12l}^* : (n_l \times m)$$

$$\cdot\cdot(20)$$

In this manner, even if the coefficient matrices do not satisfy positive definiteness, the mass, damping, and stiffness matrices can be diagonalized simultaneously, and the modal equations can be derived in the form of real-type second-order differential equation. This is the most important feature of the new type of complex modal analysis.

[Correction of effect of higher-order modes by using lower-order modes]

The linear state variable $y_1$ in the nonlinear state equation [Equation (2)] is represented by a sum of $y_{1l}$ based on the lower-order modes and $y_{1h}$ based on the higher-order modes as shown in Equation (15), and $y_{1l}$ is converted into the real modal coordinates corresponding to the lower-order modes introduced in Equation (17). Furthermore, if the effect of $y_{1h}$ based on the higher-order modes is corrected and eliminated, the following equation is obtained.
[Math. 15]

$$(M_{22} + \tilde{M}_{22h})\ddot{y}_2 + (C_{22} + \tilde{C}_{22h})\dot{y}_2 + (K_{22} + \tilde{K}_{22h})y_2$$
$$\left. + R_{12l}^{*T}\ddot{\xi}_{1l} + Q_{12l}^{*T}\dot{\xi}_{1l} + P_{12l}^{*T}\xi_{1l} + n_2 = f_2 + q_{21h}\dot{f}_1 + p_{21h}f_1 \right\}$$

$$\cdots (21)$$

Where, $M^{\sim}_{22h}$, $C^{\sim}_{22h}$, $K^{\sim}_{22h}$, $p_{21h}$, and $q_{21h}$ represent correction terms of the higher-order modes. These are all obtained from the lower-order modes as follows.
[Math. 16]

$$\tilde{M}_{22h} = M_{21}\Gamma_{1h}C_{12} - M_{21}\Gamma_{2h}K_{12} + C_{21}\Gamma_{1h}M_{12} - C_{21}\Gamma_{2h}C_{12} - C_{21}\Gamma_{3h}K_{12}$$
$$- K_{21}\Gamma_{2h}M_{12} - K_{21}\Gamma_{3h}C_{12} - K_{21}\Gamma_{4h}K_{12}$$

$$\tilde{C}_{22h} = C_{21}\Gamma_{1h}C_{12} - K_{21}\Gamma_{2h}C_{12} - C_{21}\Gamma_{2h}K_{12} - K_{21}\Gamma_{3h}K_{12} + M_{21}\Gamma_{1h}K_{12}$$

$$\tilde{K}_{22h} = C_{21}\Gamma_{1h}K_{12} - K_{21}\Gamma_{2h}K_{12}$$

$$p_{21h} = C_{21}\Gamma_{1h} - K_{21}\Gamma_{2h}$$

$$q_{21h} = M_{21}\Gamma_{1h} - C_{21}\Gamma_{2h} - K_{21}\Gamma_{3h}$$

$$\Gamma_{1h} = -{}^I\tilde{\Phi}_{1l}\tilde{\Psi}_{22l}^T - {}^I\tilde{\Phi}_{1ll}{}^I\tilde{\Psi}_{1l}^T = -{}^I\tilde{\Phi}_{1l}\tilde{\Psi}_{1ll}^T - \tilde{\Phi}_{22l}{}^I\tilde{\Psi}_{1l}^T$$

$$\Gamma_{2h} = K_{11}^{-1} - \tilde{\Phi}_{1ll}\Omega_{1l}^{-2}\tilde{\Psi}_{1ll}^T + {}^I\tilde{\Phi}_{1l}{}^I\tilde{\Psi}_{1l}^T$$

$$\Gamma_{3h} = -K_{11}^{-1}C_{11}K_{11}^{-1} - 2\tilde{\Phi}_{1ll}{}^R\Lambda_{1l}\Omega_{1l}^{-4}\tilde{\Psi}_{1ll}^T - \tilde{\Phi}_{1ll}\Omega_{1l}^{-2}{}^I\tilde{\Psi}_{1ll}^T - {}^I\tilde{\Phi}_{1l}\Omega_{1l}^{-2}\tilde{\Psi}_{1ll}^T$$

$$\Gamma_{4h} = K_{11}^{-1}C_{11}K_{11}^{-1}C_{11}K_{11}^{-1} - K_{11}^{-1}M_{11}K_{11}^{-1}$$
$$- \tilde{\Phi}_{1ll}\Omega_{1l}^{-4}\{(4\Omega_{1l}^{-2}{}^R\Lambda_{1l}^2 - I_{n_l})\tilde{\Psi}_{1ll}^T + 2{}^R\Lambda_{1l}{}^I\tilde{\Psi}_{1l}^T\} - {}^I\tilde{\Phi}_{1l}\Omega_{1l}^{-2}(2\Omega_{1l}^{-2}{}^R\Lambda_{1l}\tilde{\Psi}_{1ll}^T + {}^I\tilde{\Psi}_{1l}^T)$$

$$\cdots (22)$$

<<Derivation of Dimension reduced model>>

[Separation of dominant modes and secondary modes]

Among the real modal coordinates $\eta_{1l}$ and $\eta^*_{1l}$ introduced in Equation (17) and Equation (18), there are modal coordinates that have a large effect on an accuracy of a solution of an original large-scale system (referred to as a dominant mode), and modal coordinates that have a small effect (referred to as a secondary mode). Subscripts "a" and "b" indicate variables or physical quantities associated with the dominant modes and the secondary modes, respectively. For example, $\eta_{1a}$ represents the dominant modal coordinates and $\eta_{1b}$ represents the secondary modal coordinates.
The left and right real modal matrices ${}^R\Phi^{\wedge}_{1l}$ and ${}^R\Psi^{\wedge}_{1l}$ for the lower-order modes obtained by Equation (14) are separated into modal matrices ${}^R\Phi^{\wedge}_{1a}$ and ${}^R\Psi^{\wedge}_{1a}$ consisting of $n_a$ pairs ($2n_a$ pieces) of the dominant modes and modal matrices ${}^R\Phi^{\wedge}_{1b}$ and ${}^R\Psi^{\wedge}_{1b}$ consisting of $n_b$ pairs ($2n_b$ pieces) of the secondary modes ($n_l=n_a+n_b$), and they are rearranged as follows. A subscript "#" represents "a" or "b" in the following description.
[Math. 17]

$$
\left.
\begin{aligned}
&{}^{R}\hat{\Phi}_{1l} = \begin{bmatrix} {}^{R}\hat{\Phi}_{1a} & {}^{R}\hat{\Phi}_{1b} \end{bmatrix}, \quad {}^{R}\hat{\Psi}_{1l} = \begin{bmatrix} {}^{R}\hat{\Psi}_{1a} & {}^{R}\hat{\Psi}_{1b} \end{bmatrix} : (2n \times 2(n_a + n_b)) \\[2mm]
&{}^{R}\hat{\Phi}_{1\#} = \begin{bmatrix} \tilde{\Phi}_{11\#} & {}^{I}\tilde{\Phi}_{1\#} \\ -{}^{I}\tilde{\Phi}_{1\#}\Omega_{1\#}^2 & \tilde{\Phi}_{22\#} \end{bmatrix}, \quad {}^{R}\hat{\Psi}_{1\#} = \begin{bmatrix} \tilde{\Psi}_{11\#} & {}^{I}\tilde{\Psi}_{1\#} \\ -{}^{I}\tilde{\Psi}_{1\#}\Omega_{1\#}^2 & \tilde{\Psi}_{22\#} \end{bmatrix} : (2n \times 2n_\#) \\[2mm]
&\tilde{\Phi}_{11\#} = {}^{R}\tilde{\Phi}_{1\#}{}^{I}\Lambda_{1\#} - {}^{I}\tilde{\Phi}_{1\#}{}^{R}\Lambda_{1\#}, \quad \tilde{\Phi}_{22\#} = {}^{R}\tilde{\Phi}_{1\#}{}^{I}\Lambda_{1\#} + {}^{I}\tilde{\Phi}_{1\#}{}^{R}\Lambda_{1\#} \\[2mm]
&\tilde{\Psi}_{11\#} = {}^{R}\tilde{\Psi}_{1\#}{}^{I}\Lambda_{1\#} - {}^{I}\tilde{\Psi}_{1\#}{}^{R}\Lambda_{1\#}, \quad \tilde{\Psi}_{22\#} = {}^{R}\tilde{\Psi}_{1\#}{}^{I}\Lambda_{1\#} + {}^{I}\tilde{\Psi}_{1\#}{}^{R}\Lambda_{1\#} \\[2mm]
&{}^{R}\tilde{\Phi}_{1\#} = {}^{R}\Phi_{1\#}{}^{I}\Lambda_{1\#}^{-1}, \quad {}^{I}\tilde{\Phi}_{1\#} = {}^{I}\Phi_{1\#}{}^{I}\Lambda_{1\#}^{-1}, \quad {}^{R}\tilde{\Psi}_{1\#} = {}^{R}\Psi_{1\#}{}^{I}\Lambda_{1\#}^{-1}, \quad {}^{I}\tilde{\Psi}_{1\#} = {}^{I}\Psi_{1\#}{}^{I}\Lambda_{1\#}^{-1}
\end{aligned}
\right\}
$$

$$\cdot\cdot(2\,3)$$

Corresponding to the separation of the real modal matrices, modal coordinates of Equation (19), Equation (20) and Equation (21) are also separated into the dominant modes and the secondary modes as follows.

[Math. 18]

$$
\left.
\begin{aligned}
&\ddot{\xi}_{1\#} + 2Z_{1\#}\Omega_{1\#}\dot{\xi}_{1\#} + \Omega_{1\#}^2\xi_{1\#} + R_{12\#}\ddot{y}_2 + Q_{12\#}\dot{y}_2 + P_{12\#}y_2 = {}^{I}\tilde{\Psi}_{1\#}^{T}\dot{f}_1 + \tilde{\Psi}_{11\#}^{T}f_1 \\[2mm]
&P_{12\#} = -\Omega_{1\#}^2{}^{I}\tilde{\Psi}_{1\#}^{T}C_{12} + \tilde{\Psi}_{11\#}^{T}K_{12}, \quad Q_{12\#} = -\Omega_{1\#}^2{}^{I}\tilde{\Psi}_{1\#}^{T}M_{12} + \tilde{\Psi}_{22\#}^{T}C_{12} + {}^{I}\tilde{\Psi}_{1\#}^{T}K_{12} \\[2mm]
&R_{12\#} = \tilde{\Psi}_{22\#}^{T}M_{12}, \quad P_{12\#}, Q_{12\#}, R_{12\#} : (n_\# \times m)
\end{aligned}
\right\}
$$

$$\cdot\cdot(2\,4)$$

$$
\left.
\begin{aligned}
&\ddot{\xi}_{1\#}^* + 2Z_{1\#}\Omega_{1\#}\dot{\xi}_{1\#}^* + \Omega_{1\#}^2\xi_{1\#}^* + R_{12\#}^*\ddot{y}_2 + Q_{12\#}^*\dot{y}_2 + P_{12\#}^*y_2 = 0 \\[2mm]
&P_{12\#}^* = -\Omega_{1\#}^2{}^{I}\tilde{\Phi}_{1\#}^{T}C_{21}^{T} + \tilde{\Phi}_{11\#}^{T}K_{21}^{T}, \quad Q_{12\#}^* = -\Omega_{1\#}^2{}^{I}\tilde{\Phi}_{1\#}^{T}M_{21}^{T} + \tilde{\Phi}_{22\#}^{T}C_{21}^{T} + {}^{I}\tilde{\Phi}_{1\#}^{T}K_{21}^{T} \\[2mm]
&R_{12\#}^* = \tilde{\Phi}_{22\#}^{T}M_{21}^{T}, \quad P_{12\#}^*, Q_{12\#}^*, R_{12\#}^* : (n_\# \times m)
\end{aligned}
\right\}
$$

$$\cdot\cdot(2\,5)$$

$$
\left.
\begin{aligned}
&(M_{22} + \hat{M}_{22h})\ddot{y}_2 + (C_{22} + \tilde{C}_{22h})\dot{y}_2 + (K_{22} + \hat{K}_{22h})y_2 \\[2mm]
&\quad + R_{12a}^{*T}\ddot{\xi}_{1a} + Q_{12a}^{*T}\dot{\xi}_{1a} + P_{12a}^{*T}\xi_{1a} + R_{12b}^{*T}\ddot{\xi}_{1b} + Q_{12b}^{*T}\dot{\xi}_{1b} + P_{12b}^{*T}\xi_{1b} + n_2 \\[2mm]
&= f_2 + q_{21h}\dot{f}_1 + p_{21h}f_1
\end{aligned}
\right\}
$$

$$\cdot\cdot(2\,6)$$

[Approximate solution of secondary mode]

Since an effect of nonlinearity is small for the secondary modes, then, ignoring this effect and assuming that

$y_2$, $\xi_{1b}$ and $\xi^*_{1b}$ vibrate harmonically with the fundamental period $2\pi/\omega$ yields $\ddot{y}_2 = -\omega^2 y_2$, $\ddot{\xi}_{1b} = -\omega^2 \xi_{1b}$, $\ddot{\xi}^*_{1b} = -\omega^2 \xi^*_{1b}$. Furthermore, considering that $\ddot{f}_1 = -\omega^2 f_1$ holds for the harmonic external force, from Equations (24) and (25), an approximate solution of the secondary modes is obtained as follows.

[Math. 19]

$$
\begin{bmatrix} \xi_{1b} \\ \dot{\xi}_{1b} \end{bmatrix} = \begin{bmatrix} U_{12b} & V_{12b} \\ -\omega^2 V_{12b} & U_{12b} \end{bmatrix} \begin{bmatrix} y_2 \\ \dot{y}_2 \end{bmatrix} + \begin{bmatrix} U_{11b} & V_{11b} \\ -\omega^2 V_{11b} & U_{11b} \end{bmatrix} \begin{bmatrix} f_1 \\ \dot{f}_1 \end{bmatrix}
$$

$$
\left.\begin{aligned}
U_{12b} &= -\Delta_{1b}^{-1}\{(\Omega_{1b}^2 - \omega^2 I_{n_b})(P_{12b} - \omega^2 R_{12b}) - 2\omega^2\,{}^R\Lambda_{1b}Q_{12b}\} \\
V_{12b} &= -\Delta_{1b}^{-1}\{2\,{}^R\Lambda_{1b}(P_{12b} - \omega^2 R_{12b}) + (\Omega_{1b}^2 - \omega^2 I_{n_b})Q_{12b}\} \\
U_{11b} &= \Delta_{1b}^{-1}\{(\Omega_{1b}^2 - \omega^2 I_{n_b})\tilde{\Psi}_{11b}^T - 2\omega^2\,{}^R\Lambda_{1b}\,{}^I\tilde{\Psi}_{1b}^T\} \\
V_{11b} &= \Delta_{1b}^{-1}\{2\,{}^R\Lambda_{1b}\tilde{\Psi}_{11b}^T + (\Omega_{1b}^2 - \omega^2 I_{n_b})\,{}^I\tilde{\Psi}_{1b}^T\} \\
\Delta_{1b} &= (\Omega_{1b}^2 - \omega^2 I_{n_b})^2 + (2\omega\,{}^R\Lambda_{1b})^2
\end{aligned}\right\} \quad \cdot\cdot(27)
$$

$$
\left.\begin{aligned}
\begin{bmatrix} \xi^*_{1b} \\ \dot{\xi}^*_{1b} \end{bmatrix} &= \begin{bmatrix} U^*_{12b} & V^*_{12b} \\ -\omega^2 V^*_{12b} & U^*_{12b} \end{bmatrix} \begin{bmatrix} y_2 \\ \dot{y}_2 \end{bmatrix} \\
U^*_{12b} &= -\Delta_{1b}^{-1}\{(\Omega_{1b}^2 - \omega^2 I_{n_b})(P^*_{12b} - \omega^2 R^*_{12b}) - 2\omega^2\,{}^R\Lambda_{1b}Q^*_{12b}\} \\
V^*_{12b} &= -\Delta_{1b}^{-1}\{2\,{}^R\Lambda_{1b}(P^*_{12b} - \omega^2 R^*_{12b}) + (\Omega_{1b}^2 - \omega^2 I_{n_b})Q^*_{12b}\}
\end{aligned}\right\} \quad \cdot\cdot(28)
$$

[Elimination of secondary modes and derivation of dimension reduced model]

By substituting the approximate solution of Equation (27) into the secondary modal coordinates $\xi_{1b}$, $\dot{\xi}_{1b}$, $\ddot{\xi}_{1b}$ in Equation (26) and correcting and eliminating the secondary modes, the following equation is obtained (the result of Equation (28) is used in this derivation process).

[Math. 20]

$$
\left.\begin{aligned}
(M_{22} + \tilde{M}_{22b} + \tilde{M}_{22h})\ddot{y}_2 &+ (C_{22} + \tilde{C}_{22b} + \tilde{C}_{22h})\dot{y}_2 + (K_{22} + \tilde{K}_{22b} + \tilde{K}_{22h})y_2 \\
&+ R^{*T}_{12a}\ddot{\xi}_{1a} + Q^{*T}_{12a}\dot{\xi}_{1a} + P^{*T}_{12a}\xi_{1a} + n_2 = f_2 + (q_{21b} + q_{21h})\dot{f}_1 + (p_{21b} + p_{21h})f_1
\end{aligned}\right\}
$$

$$
\cdot\cdot(29)
$$

Where, $\tilde{M}_{22b}$, $\tilde{C}_{22b}$, $\tilde{K}_{22b}$, $p_{21b}$ and $q_{21b}$ represent correction terms of the secondary modes and are given by the following equations.

[Math. 21]

$$\tilde{M}_{22b} = M_{21}{}^{I}\tilde{\Phi}_{1I}\Omega_{1I}^{2}{}^{I}\tilde{\Psi}_{1I}^{T}M_{12} + U_{12b}^{*T}U_{12b} - V_{12b}^{*T}\Omega_{1b}^{2}V_{12b} + U_{12b}^{*T}R_{12b} + R_{12b}^{*T}U_{12b}$$

$$\tilde{C}_{22b} = -P_{12I}^{*T}{}^{I}\tilde{\Psi}_{1I}^{T}M_{12} + M_{21}{}^{I}\tilde{\Phi}_{1I}\Omega_{1I}^{2}{}^{I}\tilde{\Psi}_{1I}^{T}C_{12} + R_{12I}^{*T}{}^{I}\tilde{\Psi}_{1I}^{T}K_{12}$$

$$+ (P_{12b}^{*T} - \omega^{2}R_{12b}^{*T})V_{12b} + Q_{12b}^{*T}U_{12b}$$

$$\tilde{K}_{22b} = -P_{12I}^{*T}{}^{I}\tilde{\Psi}_{1I}^{T}C_{12} + (Q_{12I}^{*T} + M_{21}{}^{I}\tilde{\Phi}_{1I}\Omega_{1I}^{2}){}^{I}\tilde{\Psi}_{1I}^{T}K_{12}$$

$$+ (P_{12b}^{*T} - \omega^{2}R_{12b}^{*T})U_{12b} - \omega^{2}Q_{12b}^{*T}V_{12b}$$

$$+ \omega^{2}(U_{12b}^{*T}U_{12b} - V_{12b}^{*T}\Omega_{1b}^{2}V_{12b} + U_{12b}^{*T}R_{12b} + R_{12b}^{*T}U_{12b})$$

$$p_{21b} = (Q_{12I}^{*T} + M_{21}{}^{I}\tilde{\Phi}_{1I}\Omega_{1I}^{2}){}^{I}\tilde{\Psi}_{1I}^{T} - (P_{12b}^{*T} - \omega^{2}R_{12b}^{*T})U_{11b} + \omega^{2}Q_{12b}^{*T}V_{11b}$$

$$q_{21b} = R_{12I}^{*T}{}^{I}\tilde{\Psi}_{1I}^{T} - (P_{12b}^{*T} - \omega^{2}R_{12b}^{*T})V_{11b} - Q_{12b}^{*T}U_{11b}$$

$$\cdots (30)$$

Furthermore, from the equation with the subscript "#" in Equation (24) replaced with "a" and Equation (29), an equation whose dimensionality is reduced to ($n_a$+m) dimension is obtained as follows.
[Math. 22]

$$M\ddot{\xi} + C\dot{\xi} + K\xi + n = f$$

$$\xi = \begin{bmatrix} \xi_{1a} \\ y_2 \end{bmatrix}, \quad M = \begin{bmatrix} I_{n_a} & R_{12a} \\ R_{12a}^{*T} & M_{22} + \tilde{M}_{22} \end{bmatrix}, \quad C = \begin{bmatrix} 2Z_{1a}\Omega_{1a} & Q_{12a} \\ Q_{12a}^{*T} & C_{22} + \tilde{C}_{22} \end{bmatrix}$$

$$K = \begin{bmatrix} \Omega_{1a}^{2} & P_{12a} \\ P_{12a}^{*T} & K_{22} + \tilde{K}_{22} \end{bmatrix}, \quad n = \begin{bmatrix} 0 \\ n_2 \end{bmatrix}, \quad f = \begin{bmatrix} {}^{I}\tilde{\Psi}_{1a}^{T}\dot{f}_1 + \tilde{\Psi}_{11a}^{T}f_1 \\ f_2 + q_{21}\dot{f}_1 + p_{21}f_1 \end{bmatrix}$$

$$\tilde{M}_{22} = \tilde{M}_{22b} + \tilde{M}_{22h}, \quad \tilde{C}_{22} = \tilde{C}_{22b} + \tilde{C}_{22h}, \quad \tilde{K}_{22} = \tilde{K}_{22b} + \tilde{K}_{22h}$$

$$q_{21} = q_{21b} + q_{21h}, \quad p_{21} = p_{21b} + p_{21h}$$

$$\cdots (31)$$

The model represented by Equation (31) is called the dimension reduced model. The approximate solution is calculated using Equation (31).

[Approximate solution of physical coordinates of linear state variables]

When approximate solutions $\xi_{1a}$, $\dot{\xi}_{1a}$, $y_2$, $\dot{y}_2$ are obtained from Equation (31) of the dimension reduced model, the approximate solutions for linear state variables are converted into physical coordinates when necessary.
The relational equations required for this procedure are as follows.
[Math. 23]

$$\begin{bmatrix} y_1 \\ \dot{y}_1 \end{bmatrix} = \begin{bmatrix} y_{1a} \\ \dot{y}_{1a} \end{bmatrix} + \begin{bmatrix} y_{1b} \\ \dot{y}_{1b} \end{bmatrix} + \begin{bmatrix} y_{1h} \\ \dot{y}_{1h} \end{bmatrix} \qquad \cdot\cdot(32)$$

Where,

$$\begin{bmatrix} y_{1a} \\ \dot{y}_{1a} \end{bmatrix} = \begin{bmatrix} \tilde{\Phi}_{11a} & {}^I\tilde{\Phi}_{1a} \\ -{}^I\tilde{\Phi}_{1a}\Omega_{1a}^2 & \tilde{\Phi}_{22a} \end{bmatrix} \left\{ \begin{bmatrix} \xi_{1a} \\ \dot{\xi}_{1a} \end{bmatrix} + \begin{bmatrix} -{}^I\tilde{\Psi}_{1a}^T C_{12} & -{}^I\tilde{\Psi}_{1a}^T M_{12} \\ {}^I\tilde{\Psi}_{1a}^T K_{12} & 0 \end{bmatrix} \begin{bmatrix} y_2 \\ \dot{y}_2 \end{bmatrix} + \begin{bmatrix} 0 & 0 \\ -{}^I\tilde{\Psi}_{1a}^T & 0 \end{bmatrix} \begin{bmatrix} f_1 \\ \dot{f}_1 \end{bmatrix} \right\}$$

$$\cdot\cdot(33)$$

$$\begin{bmatrix} y_{1b} \\ \dot{y}_{1b} \end{bmatrix} = \begin{bmatrix} \tilde{\Phi}_{11b} & {}^I\tilde{\Phi}_{1b} \\ -{}^I\tilde{\Phi}_{1b}\Omega_{1b}^2 & \tilde{\Phi}_{22b} \end{bmatrix} \left\{ \begin{bmatrix} U_{12b} - {}^I\tilde{\Psi}_{1b}^T C_{12} & V_{12b} - {}^I\tilde{\Psi}_{1b}^T M_{12} \\ -\omega^2 V_{12b} + {}^I\tilde{\Psi}_{1b}^T K_{12} & U_{12b} \end{bmatrix} \begin{bmatrix} y_2 \\ \dot{y}_2 \end{bmatrix} + \right.$$
$$\left. + \begin{bmatrix} U_{11b} & V_{11b} \\ -\omega^2 V_{11b} - {}^I\tilde{\Psi}_{1b}^T & U_{11b} \end{bmatrix} \begin{bmatrix} f_1 \\ \dot{f}_1 \end{bmatrix} \right\}$$

$$\cdot\cdot(34)$$

$$\begin{bmatrix} y_{1h} \\ \dot{y}_{1h} \end{bmatrix} = -\begin{bmatrix} \Gamma_{2h}K_{12} & \Gamma_{2h}C_{12} + \Gamma_{3h}K_{12} \\ -\Gamma_{1h}K_{12} & -\Gamma_{1h}C_{12} + \Gamma_{2h}K_{12} \end{bmatrix} \begin{bmatrix} y_2 \\ \dot{y}_2 \end{bmatrix} + \begin{bmatrix} \Gamma_{2h} & \Gamma_{3h} \\ -\Gamma_{1h} & \Gamma_{2h} \end{bmatrix} \begin{bmatrix} f_1 \\ \dot{f}_1 \end{bmatrix} \qquad \cdot\cdot(35)$$

$y_{1a}$, $\dot{y}_{1a}$ represent physical coordinates based on the dominant modes, $y_{1b}$, $\dot{y}_{1b}$ represent physical coordinates based on the secondary modes, and $y_{1h}$, $\dot{y}_{1h}$ represent physical coordinates based on the higher-order modes.

[Selection method of dominant modes]

When full content of a complicated and diverse frequency response is clarified while gradually changing an angular frequency $\omega$ of an external force in a nonlinear system, an approximate solution obtained for a certain $\omega$ is often used as an initial value for $\omega \pm \Delta\omega$ in iterative approximation calculation. Therefore, $\xi_{1a}$ to be used for $\omega \pm \Delta\omega$ can be selected by using information included in the approximate solution obtained for a certain $\omega$.

The relational equations required for this procedure are as follows.

Now, suppose that an approximate solution of the dimension reduced model consisting of $\xi_{1a}$, $\dot{\xi}_{1a}$, $y_2$ and $\dot{y}_2$ is obtained for a certain $\omega$. From this approximate solution $y_2$, $\dot{y}_2$, an approximate solution of lower-order modal coordinates $\xi_{1l}$ can be calculated by the following equation.

[Math. 24]

$$\begin{bmatrix} \xi_{1l} \\ \dot{\xi}_{1l} \end{bmatrix} = \begin{bmatrix} U_{12l} & V_{12l} \\ -\omega^2 V_{12l} & U_{12l} \end{bmatrix} \begin{bmatrix} y_2 \\ \dot{y}_2 \end{bmatrix} + \begin{bmatrix} U_{11l} & V_{11l} \\ -\omega^2 V_{11l} & U_{11l} \end{bmatrix} \begin{bmatrix} f_1 \\ \dot{f}_1 \end{bmatrix}$$

$$U_{12l} = -\Delta_{1l}^{-1}\{(\Omega_{1l}^2 - \omega^2 I_{n_l})(P_{12l} - \omega^2 R_{12l}) - 2\omega^2 {}^R\Lambda_{1l}Q_{12l}\}$$

$$V_{12l} = -\Delta_{1l}^{-1}\{2^R\Lambda_{1l}(P_{12l} - \omega^2 R_{12l}) + (\Omega_{1l}^2 - \omega^2 I_{n_l})Q_{12l}\}$$

$$U_{11l} = \Delta_{1l}^{-1}\{(\Omega_{1l}^2 - \omega^2 I_{n_l})\tilde{\Psi}_{11l}^T - 2\omega^2 {}^R\Lambda_{1l}{}^I\tilde{\Psi}_{1l}^T\}$$

$$V_{11l} = \Delta_{1l}^{-1}\{2^R\Lambda_{1l}\tilde{\Psi}_{11l}^T + (\Omega_{1l}^2 - \omega^2 I_{n_l})^I\tilde{\Psi}_{1l}^T\}$$

$$\Delta_{1l} = (\Omega_{1l}^2 - \omega^2 I_{n_l})^2 + (2\omega^R\Lambda_{1l})^2$$

$$\cdots (36)$$

An amplitude for each mode of this approximate solution can be defined by the following equation.
[Math. 25]

$$\Delta\xi_{1,p} = \left\| \xi_{1,p} \right\| = \sqrt{\frac{\omega}{\pi}\int_0^{2\pi/\omega}\{\xi_{1,p}(t)\}^2 dt} \quad (p = 1, \cdots, n_l) \quad \cdots (37)$$

In the calculation of $\omega \pm \Delta\omega$, only a mode whose modal amplitude $\|\xi_{1,p}\|$ is greater than a set threshold value $\delta$ is selected as $\xi_{1a}$. If it is assumed that the number of selected dominant modes is $n_a$ and the number of remaining secondary modes is $n_b$, $n_1 = n_a + n_b$. An upper limit value $n_{a,max}$ of $n_a$ may be defined depending on a case.

With this method, it is possible to efficiently calculate a frequency response while appropriately selecting dominant modes as few as possible according to characteristics of a solution. In this method, the problem is how to set the threshold value $\delta$ for the modal amplitude and the upper limit value $n_{a,max}$ for the number of dominant modes. In practical use, by obtaining multiple frequency responses while gradually decreasing $\delta$ and gradually increasing $n_{a,max}$, and when the analytical results no longer change, a highly accurate solution is considered to have been obtained. Since the dimension reduced model can be calculated fairly fast, it is considered that a cost for a plurality of calculations is not a significant issue in practice. Note that a case when the analytical results do not change includes not only a case where the analytical results do not change at all, but also a case where a difference between the analytical results is less than a predetermined reference.

As for the method of setting the number of dominant modes $n_a$ at a first $\omega$ at which the calculation is started, for example, $n_a = n_l$ (the number of lower-order modes) may be set.

«Calculation procedure of frequency response»

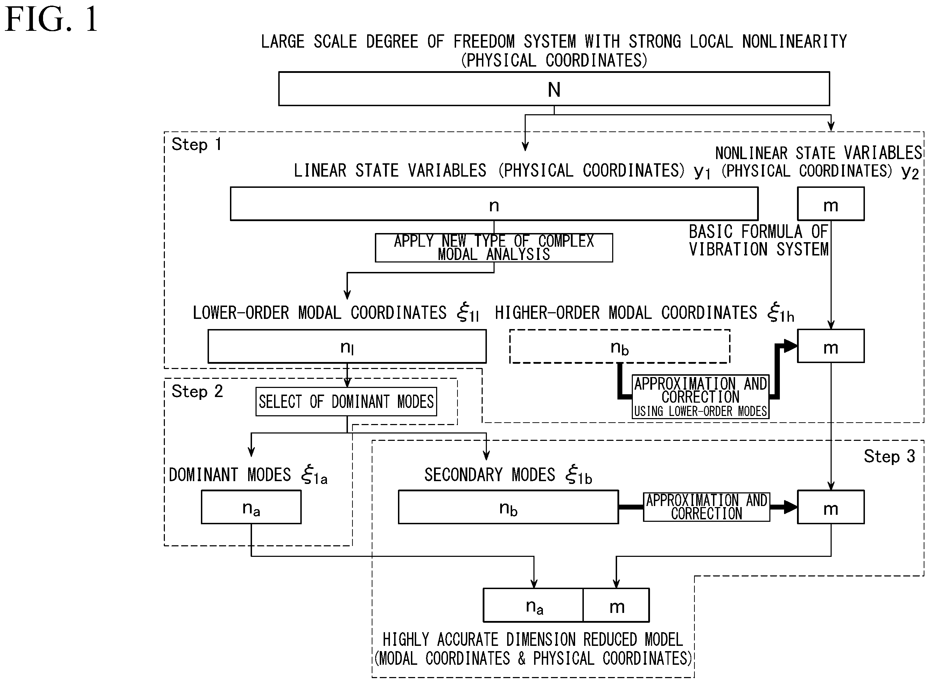

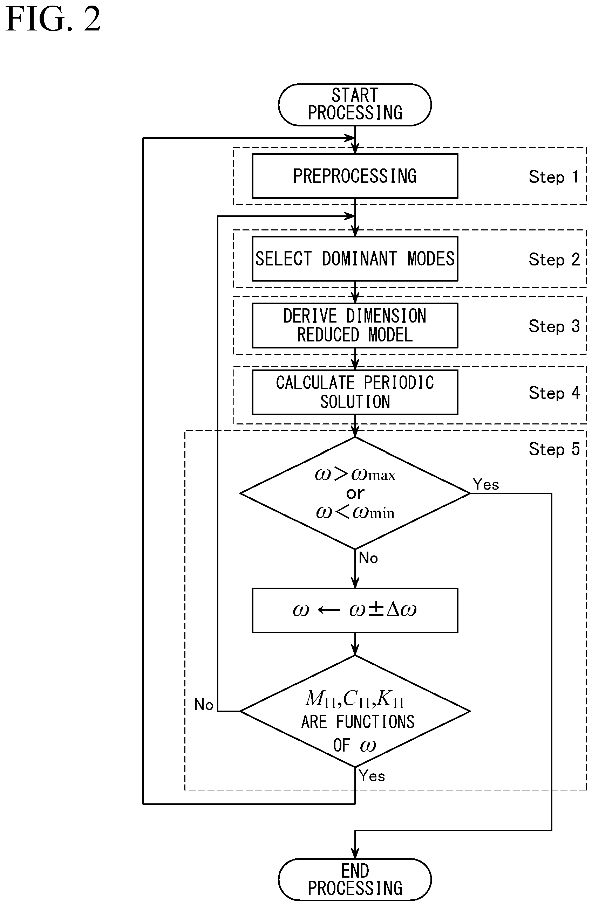

A procedure for calculating the frequency response is briefly summarized below (refer to FIG. 1 and FIG. 2).

(Step 1) Preprocessing
(Step 1-1)
Calculation of the complex eigenvalues and the complex eigenvectors of the lower-order modes for the linear state variables [Equation (8), Equation (10), Equation (12), Equation (13)] and realization of the complex eigenvectors [Equation (14)]
(Step 1-2)
Introduction of the real modal coordinates for the physical coordinates of the lower-order modes [Equation (17), Equation (18)] and derivation of the real modal equation [Equation (19), Equation (20)]
(Step 1-3)
Correction of the effect of the higher-order modes using the lower-order modes for the equation for the nonlinear state variables [Equation (21)]
(Step 2) Selection of the dominant mode [Equation (36), Equation (37)]

(Step 3) Derivation of the dimension reduced model

(Step 3-1)

Separation of the dominant mode and the secondary mode [Equation (23), Equation (24), Equation (25), Equation (26)]

(Step 3-2) Calculation of the approximate solution of the secondary mode [Equation (27), Equation (28)]

(Step 3-3)

Derivation of the dimension reduced model [Equation (29), Equation (30), Equation (31)]

(Step 4)

Calculation of the periodic solution of the dimension reduced model [Equation (31)]

(Step 5) Determination of calculation end or continuation

The calculation will end when the angular frequency $\omega$ reaches an upper or lower limit of an analysis range. When it does not reach the limit, $\omega \pm \Delta \omega$ is replaced with $\omega$. The processing returns to Step 1 when $M_{11}$, $C_{11}$, and $K_{11}$ are the functions of $\omega$, and returns to Step 2 to continue the calculation when they are constants.

«Application example of dimensionality reduction method»

[1. Analytical model]

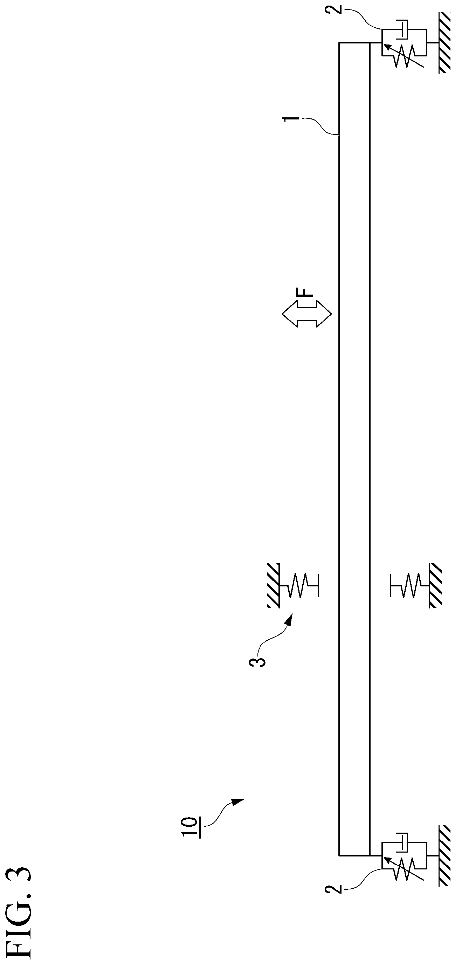

To confirm effectiveness of the dimensionality reduction method using the new type of complex modal analysis, particularly effectiveness of the elimination method of higher-order modes and the selection method of dominant modes, the dimensionality reduction method is applied to an in-plane bending vibration of a straight beam structure. FIG. 3 shows a schematic diagram of an analytical model, and Table 1 shows parameters used for the calculation.

[Table 1]

| Beam | Total length [m] | 1.5 |
|---|---|---|
| | Outer diameter [mm] | 30 |
| | Inner diameter [mm] | 25 |
| Distributed damping of beam | Translational direction [kg/(m s)] | 50 |
| | Rotational direction [kg/s] | 1.0 |
| Restoring force of support portion | Both ends [N] | $10^3 \dot{y} + 10^7 y + 10^{12} y^3$ |
| | Position of 0.5 m from left end [N] | $\begin{cases} 0 & : \lvert y \rvert \le \delta \\ 10^7 (y - \varDelta) & : \lvert y \rvert > \delta \end{cases} \delta = 2.5 \text{mm}, \varDelta = \delta \cdot \text{sign}(y)$ |
| External force | Position of 1 m from left end [N] | $0.001\omega^2 \sin\omega t$ |

In this model 10, both ends of a beam 1 having a uniform hollow circular section of 1.5m in length, 30mm in outer diameter, and 25mm in inner diameter are supported by nonlinear elements 2 (viscous dampers and cubic springs of hardening type), and a piecewise linear spring 3 (gap) is disposed at a position of 0.5 m from the left end. In addition, a harmonic external force F of a centrifugal force type is applied on a position of 1 m from the left end so that a vibration with a large amplitude generates and the effect of nonlinearity strongly appear even in a region where a frequency of the external force is relatively high.

Physical properties of beam 1 are assumed to be steel material. The beam 1 has been equally divided into 30 small elements, and the mass and stiffness matrices have been derived by the finite element method. In this case, the degrees of freedom are n=59 for the linear state variables, m=3 for the nonlinear state variables, and N=62 for the total degree of freedom.

The degrees of freedom of this analytical model are not large enough to be called a large-scale system, but they are close to a limit at which the solution can be obtained without applying the dimensionality reduction method. The damping matrix is assumed to be a non-proportional damping based on distributed damping so that an advantage of the new type of complex modal analysis appears. Table 2 shows the first-order to tenth order undamped natural frequencies of the linearized system with the coefficient of the cubic term of the nonlinear spring in this analytical model set to zero.

[Table 2]

| Order number | Natural frequency [Hz] |
|---|---|
| 1 | 34.81 |
| 2 | 138.2 |
| 3 | 306.9 |
| 4 | 535.1 |
| 5 | 812.7 |
| 6 | 1125 |
| 7 | 1459 |
| 8 | 1820 |
| 9 | 2235 |
| 10 | 2728 |

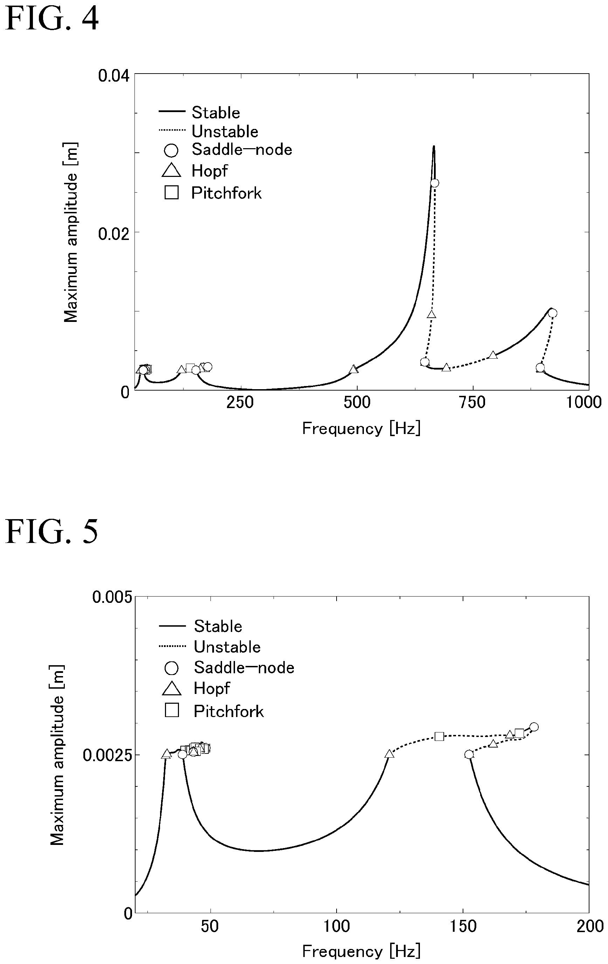

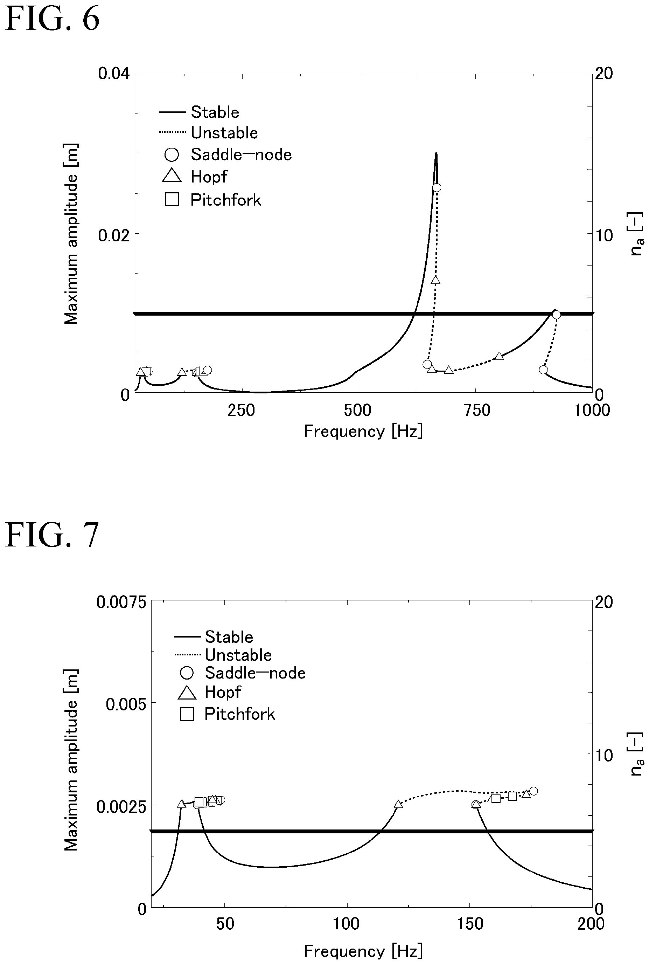

FIGS. 4 to 9 show the frequency response diagrams of this analytical model. FIGS. 4, 6, and 8 show the first-order to fifth-order primary resonance regions, and FIGS. 5, 7, and 9 show the enlarged views of the first-order and second-order primary resonance regions. FIGS. 4 and 5 show the results when the dimensionality reduction method is not applied (referred to as the full model), and FIGS. 6 to 9 show results when the dimensionality reduction method is applied (referred to as the dimension reduced model).

The dimension reduced model is constructed by selecting a fixed number (na = 5, 15) of dominant modes in the order that the natural frequency of the constraint mode is closer to the frequency of the external force, without both applying the elimination method of higher-order modes and the selection method of dominant modes. In the results of the dimension reduced model, the numbers of dominant modes (numerical values are denoted on the right axis) are indicated by a filled $\nabla$ marks, but they are constant in FIGS. 6 to 9, so that the results are presented as an apparently thick solid line.

All response curves in the frequency response denote a maximum half-amplitude at the point where the gap is disposed and bend when the amplitudes exceed a gap width (0.0025m). In the figures, a solid line represents a stable solution, a dashed line represents an unstable solution, an $\bigcirc$ mark represents a saddle-node bifurcation point, a $\square$ mark represents a pitchfork bifurcation point, and a $\triangle$ mark represents a hopf bifurcation point.

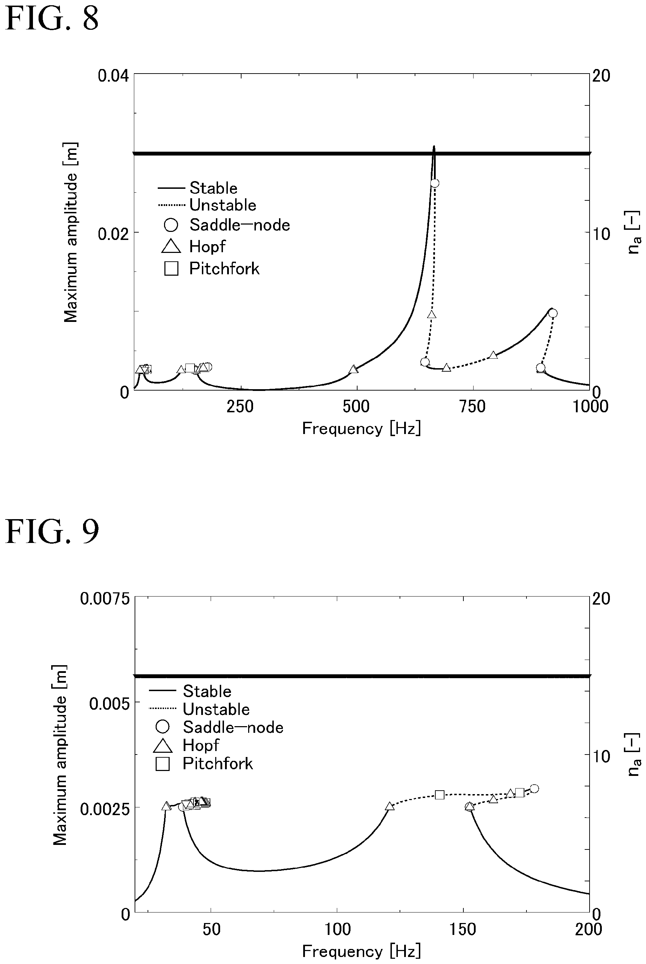

A result of comparison between FIGS. 6 and 7 when $n_a$=5 and FIGS. 4 and 5 of the full model shows a generally good consistency therebetween, but the shapes of the response curves, the peak amplitude values, and the results of stability analysis are different in a region where the effect of a gap that is strong nonlinearity appears. As shown in FIGS. 8 and 9, when the number of dominant modes is increased to $n_a$=15, the results consistent with those of the full model are obtained.

[2. Application of elimination method of higher-order modes]

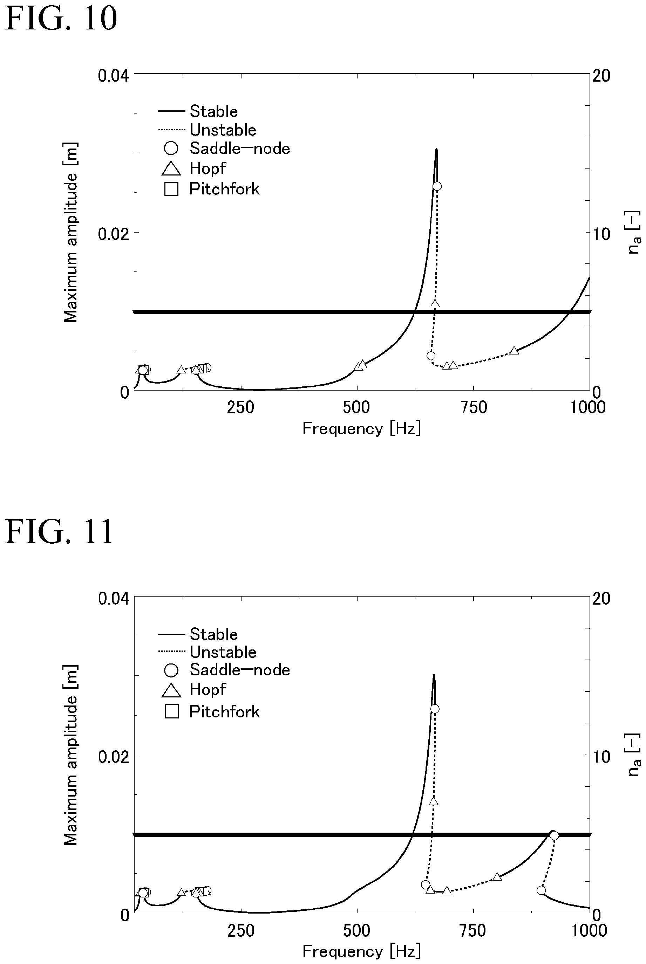

The elimination method of higher-order modes is applied to this analytical model, and the effect on an analytical result of the number of lower-order modes $n_l$ used for the analysis is investigated. FIGS. 10 and 11 show results when the number of dominant modes is fixed at $n_a$=5 and the number of lower-order modes is m=5, 10. Compared to FIG. 6 (m=n=59) when the elimination method of higher-order modes is not applied, almost the same response is obtained in the first-order and second-order primary resonance regions with m=5 in FIG. 10. However, the difference increases as the frequency increases. If m=10 in FIG. 11, it can be seen that the almost consistent results are obtained in the analytical frequency range.

In this manner, the required number of lower-order modes changes depending on the range of frequency for performing the analysis, and the solution can be obtained with high accuracy up to a higher frequency range by increasing the number of lower-order modes. In this analytical model, since the effect of higher-order mode can be estimated with high accuracy with only 10 out of 59, that is a small number of lower-order modes, this property is expected to be extremely effective for an analysis of large-scale systems.

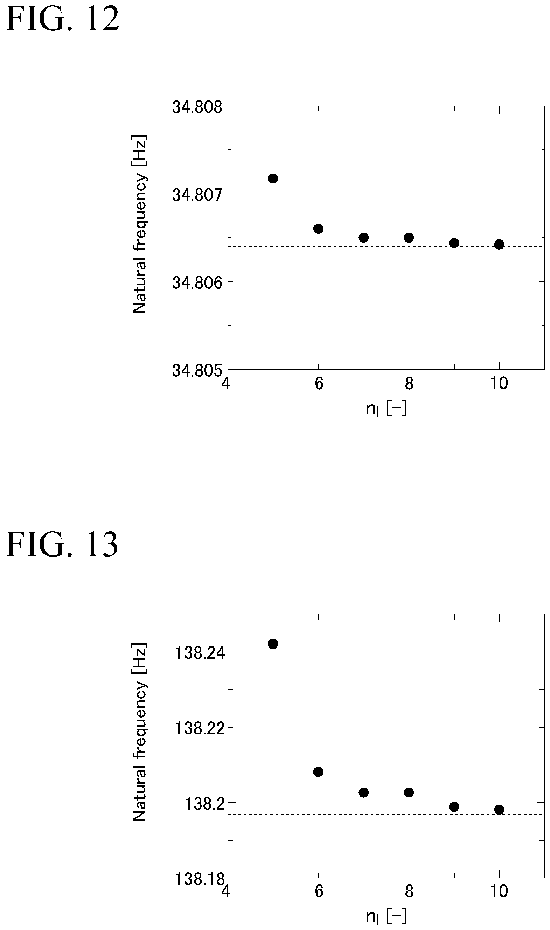

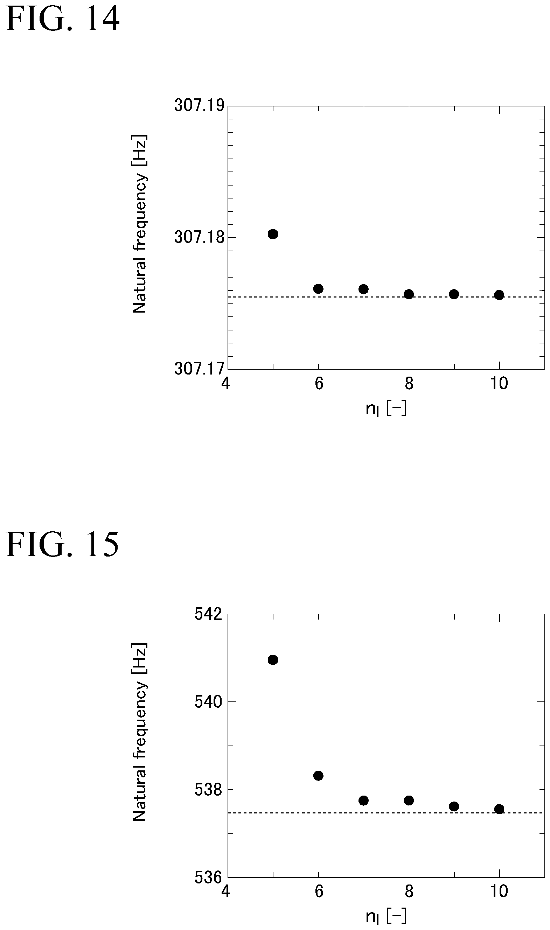

To examine the effect of the number of lower-order modes on the natural frequencies, the first-order to fifth-order natural frequencies in the analytical frequency range are shown in FIGS. 12 to 16. These natural frequencies were obtained from the dimension reduced model ($n_l=n_a$) derived by applying only the elimination method of higher-order modes. The dots represent the natural frequencies of the dimension reduced model, and the dashed line represents the natural frequency of the full model.

From the comparison of FIGS. 12 to 16, the lower order natural frequencies have better accuracy and the higher the order, the lower the accuracy. It can also be seen that the accuracy improves as the number of lower-order modes increases. Since the accuracy of the natural frequencies and the accuracy of the frequency response analytical results show similar trends with respect to the number of lower-order modes, it is considered that the accuracy of the natural frequencies can be used as a guide for setting the number of lower-order modes $n_l$ from the viewpoint of calculation cost.

[3. Application of selection method of dominant modes]

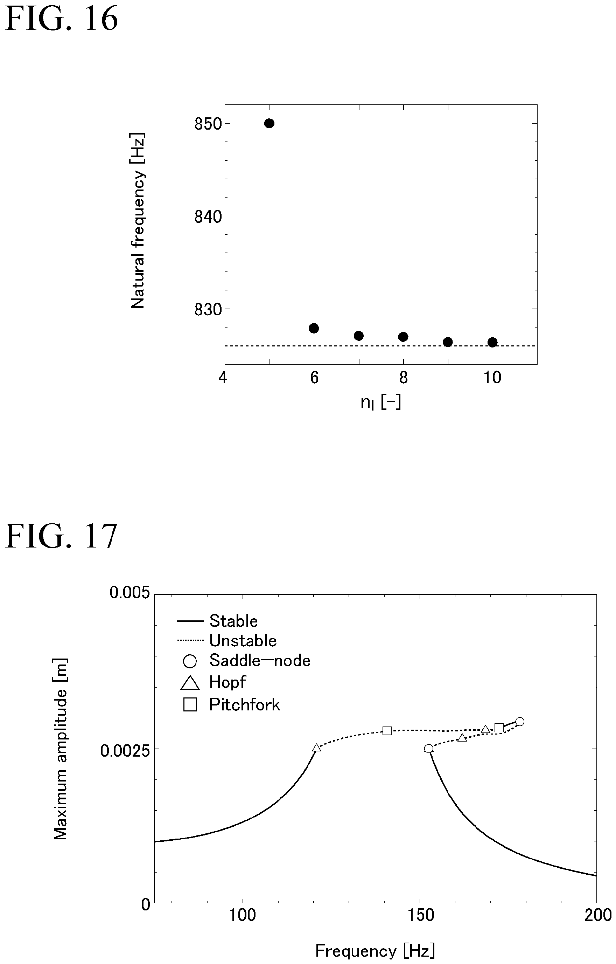

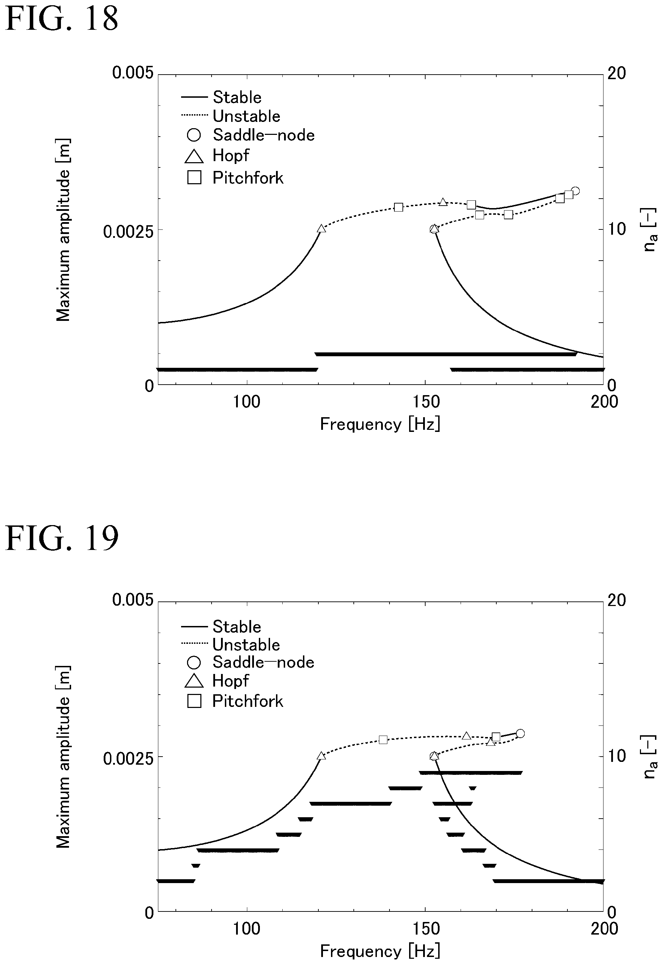

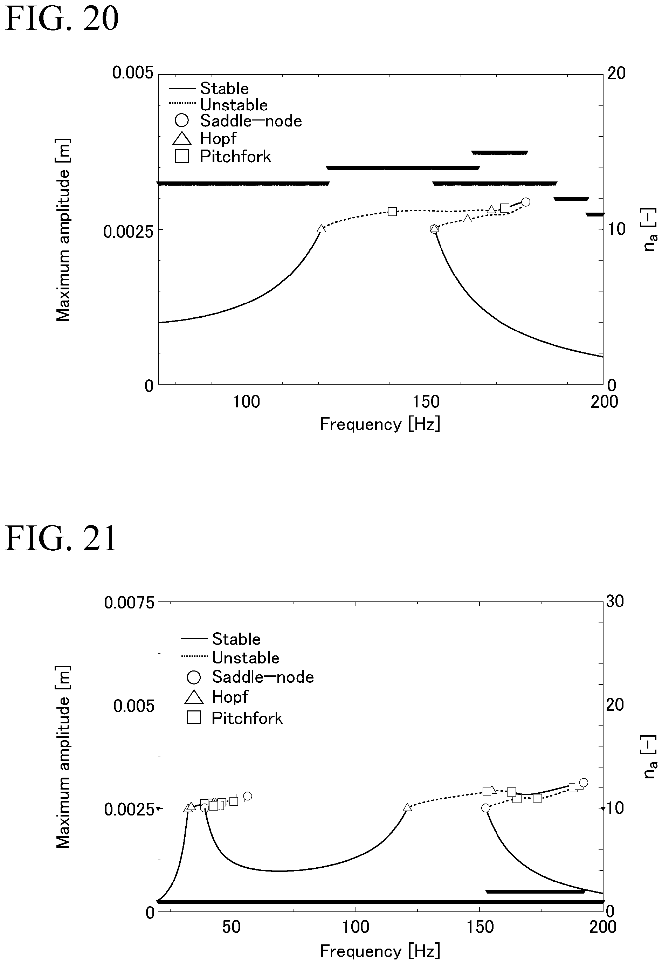

The selection method of dominant modes is applied to the analytical model. The analysis range is limited to the second-order primary resonance region. The elimination method of higher-order modes is also applied to the dimensionality reduction method, and the number of lower-order modes is set as $n_l=20$. FIG. 17 is a result of the full model, and FIGS. 18 to 20 are results of applying the selection method of dominant modes with the respective threshold values set as $\delta=5\times10^{-4}$, $1\times10^{-4}$, and $1\times10^{-5}$, respectively. It can be seen that the number of dominant modes varies with the frequency of the external force. It can be seen that when the threshold value is gradually decreased from FIG. 18 to FIG. 20, the number of modes increases and the modes required for the analysis are appropriately selected, and thereby the solution of the full model is approached. At $\delta=1\times10^{-5}$ in FIG. 20, the results consistent with those of the full model are obtained.

It is confirmed that, at any threshold value, the number of dominant modes is relatively small in a region where the amplitude of the solution is small and the effect of nonlinearity does not appear, the number of dominant modes increases as an amplitude of a solution increases, and the analysis can be performed efficiently by changing the dominant modes according to the characteristics of the solution.

[4. Model with large degree of freedom]

The present method is applied to the analytical model with 300 divisions to verify the effectiveness. In this case, the degrees of freedom are n=599 for the linear state variables, m=3 for the nonlinear state variables, and N=602 for the total degree of freedom. With this degree of freedom, the analysis for the full model becomes difficult. The analysis is performed separately in the first-order to second-order primary resonance regions and the fourth-order to fifth-order primary resonance regions.

[4.1. First-order and second-order primary resonance regions]

The analytical range of the frequency of the external force is set to 20 Hz to 200 Hz based on the natural frequencies and the results of Chapter 1 [1. analytical model]. The number of lower-order modes when the elimination method of higher-order modes is applied is set to m=15 based on a sixth-order natural frequency, which is about five times the maximum frequency of 200 Hz.

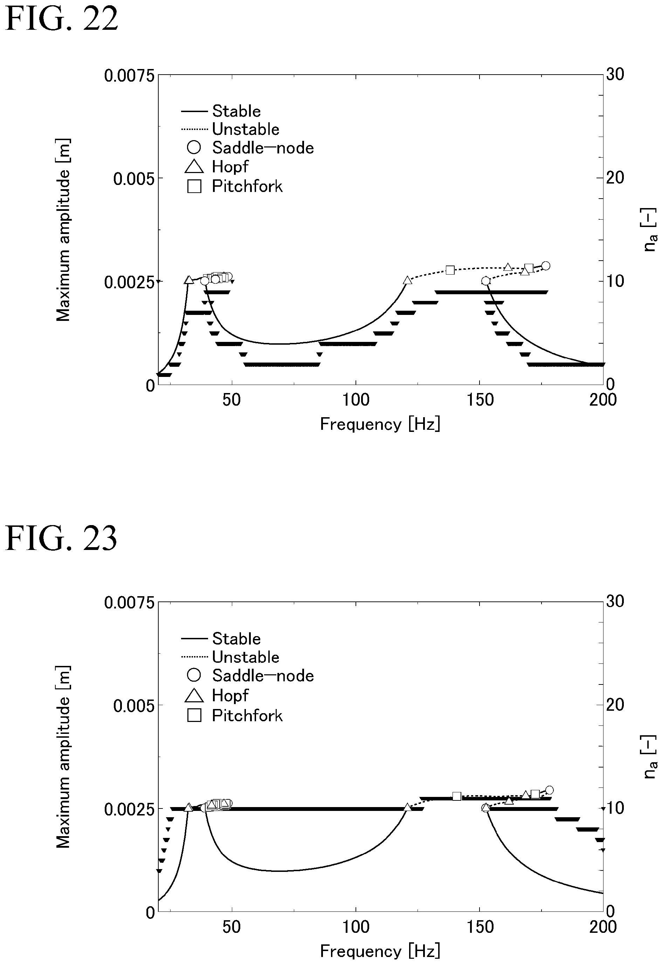

FIGS. 21 to 23 show the results of applying the selection method of dominant modes while respective threshold values are gradually decreased to $\delta=7\times10^{-4}$, $1\times10^{-4}$, and $2\times10^{-5}$. A comparison between FIG. 21 and FIG. 22 shows that there is a difference in the responses of the first-order and second-order resonances. From a comparison between FIG. 22 and FIG. 23, it can be seen that a solution near the second-order peak is slightly different although the change in response is small.

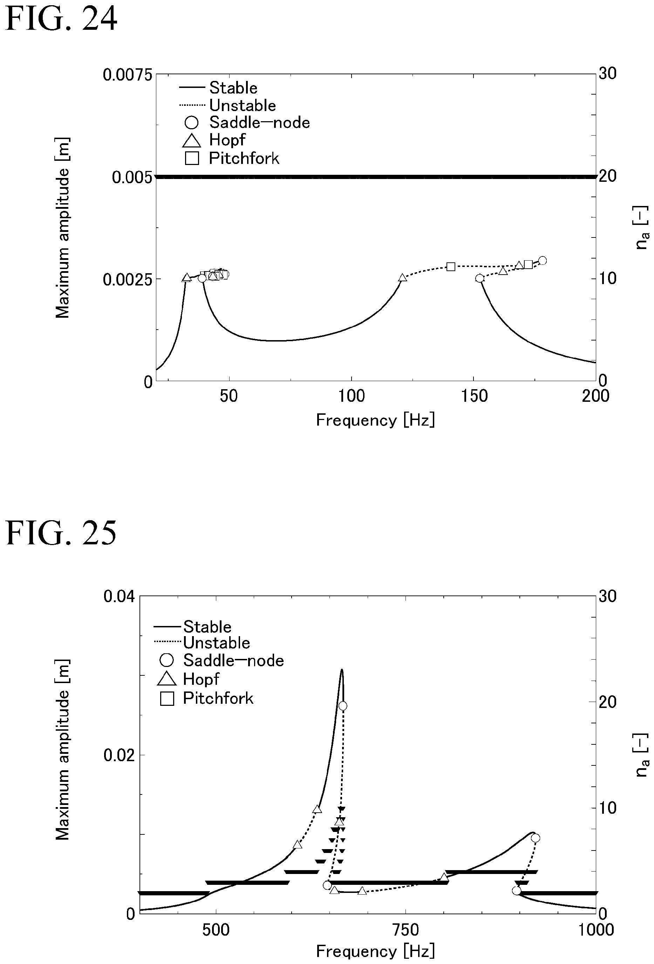

To confirm that the result of FIG. 23 is a highly accurate result, an analysis of the dimension reduced model is performed while $n_a$ is gradually increased as in Chapter 1 without applying both the elimination method of higher-order modes and the selection method of dominant modes, and a result when there was no change in the response was regarded as a correct solution for the analytical model. The result is shown in FIG. 24, where the number of lower-order modes is m=599 and the number of dominant modes is $n_a=20$. It can be seen that this result shows very good consistency with FIG. 23.

[4.2. Fourth-order and fifth-order primary resonance regions]

The analytical frequency range is set from 450 Hz to 1000 Hz, and the number of lower-order modes is set to m=30 based on the tenth-order natural frequency, which is about three times the maximum frequency of 1000 Hz. As in the previous section, the selection method of dominant modes is applied while the threshold value is gradually decreased. FIGS. 25 to 27 show the results when the threshold values are set to $\delta=1\times10^{-3}$, $5\times10^{-4}$, and $2\times10^{-4}$, respectively.

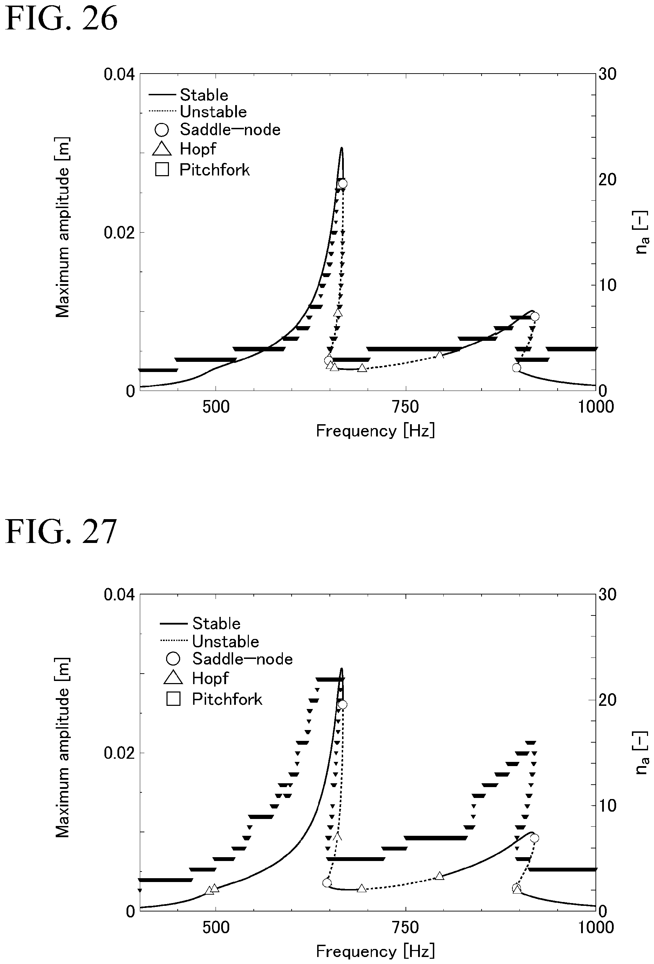

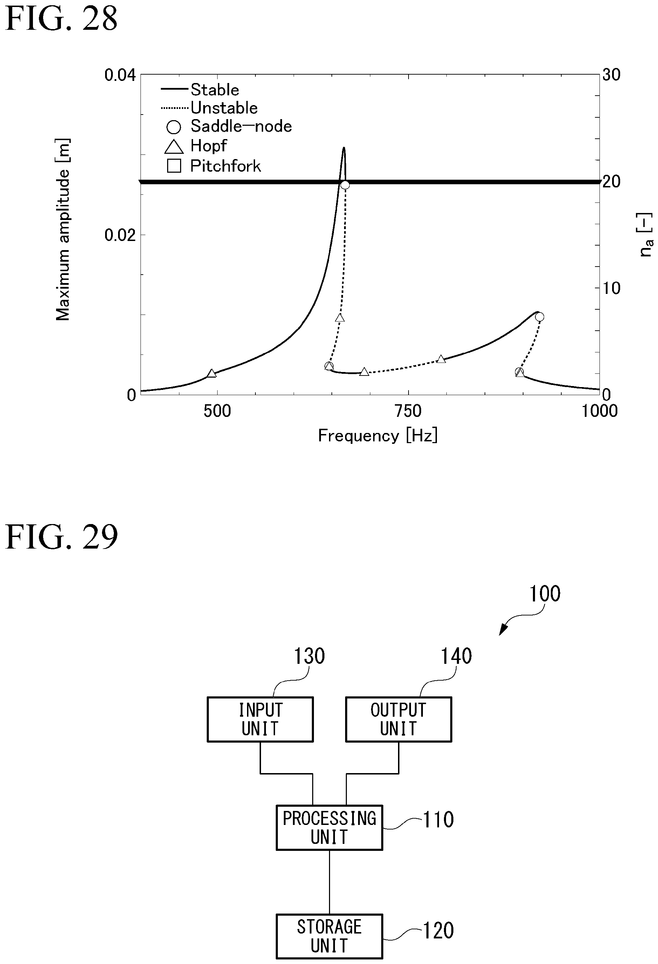

From the comparison of FIGS. 25 to 27 in the same manner as in the previous section, it can be seen that the change in response of the dimension reduced model is getting smaller. In addition, from the comparison between FIG. 27 and the results of $n_l=599$ and $n_a=20$ in FIG. 28, even in this frequency range, the results that are almost the same as those of the full model can be efficiently calculated by the dimensionality reduction method. However, the number of lower-order modes and the optimum threshold value differ depending on the frequency range for performing the analysis.

As described above, the effectiveness of the present invention was confirmed through specific numerical calculations for this analytical model.

Note that the analytical method described above may be implemented by an analysis device 100 as shown in FIG. 29.

The analysis device 100 is realized by a device such as a personal computer, a server, or an industrial computer. The analysis device 100 includes a processing unit 110, a storage unit 120, an input unit 130, and an output unit 140. The processing unit 110 applies the new type of complex modal analysis to the equation for linear state variables to convert it into the real modal equations for lower-order modes and corrects and eliminates the effect of higher-order modes of the linear state variables from the equation for nonlinear state variable. The processing unit 110 selects the dominant modes, which have the large effect on the solution of the original large-scale system, from the real modal equation, and, in relation to the secondary mode, which have the small effect, eliminates the modes thereof by incorporating the effect to the equation for nonlinear state variables as correction terms obtained from an approximate solution of the real modal equation for lower-order modes, and derives the dimension reduced model. The processing unit 110 calculates the frequency response by using the dimension reduced model. The processing unit 110 is realized by, for example, a hardware processor such as a central processing unit (CPU) executing a program (software) stored in the storage unit 120. In addition, some or all of these functional units may be realized by hardware (a circuit unit; including circuitry) such as large scale integration (LSI), an application specific integrated circuit (ASIC), an field-programmable gate array (FPGA), and a graphics processing unit (GPU), or may be realized by software and hardware in cooperation. The program may be stored in advance in a storage device (a storage device including a non-transitory storage medium) such as a hard disk drive (HDD) or flash memory or may be stored in a removable storage medium (non-transitory storage medium) such as a DVD or CD-ROM and installed by the storage medium being attached to a drive device. The input unit 130 is realized by, for example, a keyboard, a mouse, a touch panel, or the like. The output unit 140 is realized by, for example, a display, a printer, a touch panel, or the like. When an analysis method is realized, information that needs to be set, such as a threshold value, may be stored in advance in the storage unit 120 or may be input by a researcher from the input unit 130. The analytical result may be output to the output unit 140.

**Claims**

1. A vibration analysis method for analyzing vibrations of a large-scale system with local strong nonlinearities comprising:

   a process (1) of applying the new type of complex modal analysis to an equation for linear state variables to convert the equation to a real modal equation for lower-order modes, and correcting an effect of higher-order modes of the linear state variables and eliminating the modes from an equation for nonlinear state variables;
   a process (2) of selecting dominant modes, which have a large effect on a solution of an original large-scale system, from the real modal equation for lower-order modes, and, in relation to secondary modes, which have a small effect, eliminating the modes by incorporating the effect to the equation for nonlinear state variables as a correction term obtained from an approximate solution of the real modal equation for lower-order modes, and deriving the dimension reduced model; and
   a process (3) of calculating a frequency response by using the dimension reduced model.

2. The vibration analysis method according to claim 1,
   wherein, in relation to an angular frequency $\omega$, an angular frequency $\omega\pm\Delta\omega$ is replaced with $\omega$ and the process (1) to the process (3) are repeated until the angular frequency $\omega$ reaches an upper or lower limit of an analysis range.

3. The vibration analysis method according to claim 2,
   wherein, when an angular frequency $\omega\pm\Delta\omega$ is replaced with $\omega$ and the process (1) to the process (3) are repeated, the dominant modes and the secondary modes at an angular frequency $\omega\pm\Delta\omega$ are separated on the basis of the approximate solution obtained for the dimension reduced model at an angular frequency $\omega$.

4. The vibration analysis method according to claim 3,
wherein the dominant modes and the secondary modes at an angular frequency $\omega \pm \Delta\omega$ are separated on the basis of a relationship between a modal amplitude obtained from the dimension reduced model at an angular frequency $\omega$ and a predetermined threshold value.

5. The vibration analysis method according to any one of claims 1 to 4,
wherein, in the new type of complex modal analysis, calculation of complex eigenvalues and complex eigenvectors for lower-order modes of linear state variables and realization of the complex eigenvectors are performed, and introduction of real modal coordinates for physical coordinates of lower-order modes and derivation of real modal equations are performed.

6. A program which causes a computer as a device for analyzing vibrations of a large-scale system with local strong nonlinearities to function as:

a first processing unit configured to apply the new type of complex modal analysis to an equation for a linear state variable to convert the equation to a real modal equation for lower-order modes and correct an effect of higher-order modes of the linear state variables and eliminate the modes from an equation for a non-linear state variable,

a second processing unit configured to select dominant modes, which have a large effect on a solution of an original large-scale system, from the real modal equation for lower-order modes, and, in relation to secondary modes, which have a small effect, eliminate the modes by incorporating the effect to the equation for nonlinear state variables as a correction term obtained from an approximate solution of the real modal equation for lower-order modes, and derive the dimension reduced model, and

a third processing unit configured to calculate a frequency response by using the dimension reduced model.

7. A storage medium which has stored the program according to claim 6.

# FIG. 1

LARGE SCALE DEGREE OF FREEDOM SYSTEM WITH STRONG LOCAL NONLINEARITY
(PHYSICAL COORDINATES)

$N$

Step 1

NONLINEAR STATE VARIABLES (PHYSICAL COORDINATES) $y_2$

LINEAR STATE VARIABLES (PHYSICAL COORDINATES) $y_1$

BASIC FORMULA OF VIBRATION SYSTEM

$m$

$n$

APPLY NEW TYPE OF COMPLEX MODAL ANALYSIS

LOWER-ORDER MODAL COORDINATES $\xi_{1l}$     HIGHER-ORDER MODAL COORDINATES $\xi_{1h}$

$n_l$     $m$

APPROXIMATION AND CORRECTION USING LOWER-ORDER MODES

$n_b$     $m$

Step 2

SELECT OF DOMINANT MODES

DOMINANT MODES $\xi_{1a}$

$n_a$

SECONDARY MODES $\xi_{1b}$

$n_b$

Step 3

APPROXIMATION AND CORRECTION

$m$

HIGHLY ACCURATE DIMENSION REDUCED MODEL
(MODAL COORDINATES & PHYSICAL COORDINATES)

$n_a$     $m$

21

# FIG. 2

```
                    ┌─────────────────┐
                    │      START      │
                    │   PROCESSING    │
                    └────────┬────────┘
                             │
    ┌─────────────────────────────────────────────────┐
    │  ┌──────────────────────────┐                    │
    │  │      PREPROCESSING       │        Step 1      │
    │  └──────────────────────────┘                    │
    └─────────────────────────────────────────────────┘
    ┌─────────────────────────────────────────────────┐
    │  ┌──────────────────────────┐                    │
    │  │   SELECT DOMINANT MODES  │        Step 2      │
    │  └──────────────────────────┘                    │
    └─────────────────────────────────────────────────┘
    ┌─────────────────────────────────────────────────┐
    │  ┌──────────────────────────┐                    │
    │  │     DERIVE DIMENSION      │       Step 3       │
    │  │     REDUCED MODEL         │                    │
    │  └──────────────────────────┘                    │
    └─────────────────────────────────────────────────┘
    ┌─────────────────────────────────────────────────┐
    │  ┌──────────────────────────┐                    │
    │  │   CALCULATE PERIODIC      │       Step 4       │
    │  │      SOLUTION             │                    │
    │  └──────────────────────────┘                    │
    └─────────────────────────────────────────────────┘
```

Step 5

$\omega > \omega_{max}$ or $\omega < \omega_{min}$ — Yes

No

$\omega \leftarrow \omega \pm \Delta\omega$

$M_{11}, C_{11}, K_{11}$ ARE FUNCTIONS OF $\omega$

No

Yes

END PROCESSING

FIG. 3

EP 4 220 105 A1

FIG. 4

FIG. 5

FIG. 6

FIG. 7

FIG. 8

FIG. 9

## FIG. 10

## FIG. 11

FIG. 12

FIG. 13

FIG. 14

FIG. 15

FIG. 16

FIG. 17

# FIG. 18

# FIG. 19

## FIG. 20

## FIG. 21

FIG. 22

FIG. 23

FIG. 24

FIG. 25

FIG. 26

FIG. 27

FIG. 28

FIG. 29

## INTERNATIONAL SEARCH REPORT

International application No.

**PCT/JP2021/035491**

### A. CLASSIFICATION OF SUBJECT MATTER

*G01H 17/00*(2006.01)i; *G01M 7/02*(2006.01)i
FI: G01H17/00 Z; G01M7/02

According to International Patent Classification (IPC) or to both national classification and IPC

### B. FIELDS SEARCHED

Minimum documentation searched (classification system followed by classification symbols)

G01H17/00; G01M7/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 63-231233 A (HITACHI, LTD.) 27 September 1988 (1988-09-27) entire text, all drawings | 1-7 |
| A | JP 2005-249687 A (RIKOGAKU SHINKOKAI) 15 September 2005 (2005-09-15) entire text, all drawings | 1-7 |
| A | JP 2018-31676 A (RAILWAY TECHNICAL RESEARCH INSTITUTE) 01 March 2018 (2018-03-01) entire text, all drawings | 1-7 |
| A | JP 2004-69302 A (JISHIN KOGAKU KENKYUSHO, INC.) 04 March 2004 (2004-03-04) entire text, all drawings | 1-7 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/035491**

| Patent document cited in search report | | | Publication date (day/month/year) | Patent family member(s) | Publication date (day/month/year) |
|---|---|---|---|---|---|
| JP | 63-231233 | A | 27 September 1988 | (Family: none) | |
| JP | 2005-249687 | A | 15 September 2005 | (Family: none) | |
| JP | 2018-31676 | A | 01 March 2018 | (Family: none) | |
| JP | 2004-69302 | A | 04 March 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020161727 A

- JP 2017211877 A